# EUROPÄISCHE PATENTANMELDUNG

(11) **EP 4 080 405 A1**
(43) Veröffentlichungstag der Anmeldung: **26.10.2022**
(21) Anmeldenummer: 21169861.8
(22) Anmeldetag: 22.04.2021
(51) Int. Cl.: G06K 9/00, G06K 9/62

(54) **VERFAHREN ZUM IDENTIFIZIEREN VON HOLZWERKSTOFFPLATTEN**

(71) Anmelder: Fritz Egger GmbH & Co. OG, 6380 St. Johann in Tirol (AT)
(72) Erfinder: Niederer, Ralf, 3231 Frankenfels (AT); Maurer, Christian, 5760 Saalfelden am Steinernen Meer (AT)
(74) Vertreter: Cohausz & Florack

(57) **Zusammenfassung**

Die Erfindung betrifft ein Verfahren zum Identifizieren von Holzwerkstoffplatten, bei dem mindestens ein Vergleichsbild für einen vorgegebenen Abschnitt einer Seitenkante für eine Mehrzahl von Holzwerkstoffplatten aufgenommen wird, bei dem ein Vergleichsdatensatz aus dem Vergleichsbild anhand der Struktur, insbesondere auf der Basis der Geometrie, der Topographie und/oder der Verteilung der Holzwerkstoffelemente ermittelt und gespeichert wird, bei dem zu mindestens einem späteren Zeitpunkt ein Prüfbild für den vorgegebenen Abschnitt einer Seitenkante einer Holzwerkstoffplatte aufgenommen wird, bei dem ein Prüfdatensatz aus dem Prüfbild anhand der Struktur, insbesondere auf der Basis der Geometrie, Topographie und/oder der Verteilung der Holzwerkstoffelemente in gleicher Weise wie bei den Vergleichsdatensätzen ermittelt wird, bei dem der Prüfdatensatz der geprüften Holzwerkstoffplatte mit den Vergleichsdatensätzen von mehreren Holzwerkstoffplatten verglichen wird und bei dem die geprüfte Holzwerkstoffplatte bei einer Übereinstimmung des Prüfdatensatzes mit einem Vergleichsdatensatz als die Holzwerkstoffplatte identifiziert wird, für die der Vergleichsdatensatz erzeugt worden ist. Das Verfahren löst das technische Problem, das Identifizieren von Holzwerkstoffplatten zu verbessern und zu vereinfachen.

## Beschreibung

Die Erfindung betrifft ein Verfahren zum Identifizieren von Holzwerkstoffplatten.

Holzwerkstoffplatten, insbesondere Spanplatten, OSB-Platten (oriented strand board - OSB), HDF-Platten (High Density Fibre - HDF), MDF-Platten (Medium Density Fibre - MDF) oder Faserplatten, werden großtechnisch hergestellt. Die bei der Herstellung vorliegenden Herstellungsparameter wie die Arten der Holzwerkstoffelemente wie Späne oder Fasern, die Größenverteilungen der Holzwerkstoffelemente, die Art der verwendeten Harze und ggf. Zusatzstoffe, die Prozesstemperaturen und Prozessdrücke sind kritische Parameter für die Qualität der Holzwerkstoffplatten. Dazu kommen logistische Informationen wie Herstellungsdatum, Herstellungsort, Transportwege und Lagerstätten.

Durch die zunehmende Vernetzung der Vertriebswege und die zunehmenden Anforderungen an Qualitätsnachweise ist es wünschenswert, jeder einzelnen Holzwerkstoffplatte die Herstellungsparameter und die logistischen Informationen zuordnen zu können.

Im Stand der Technik der EP 2 969 428 B1 werden die Holzwerkstoffplatten mit einem optischen Code in Form eines Barcodes oder eines QR-Codes bedruckt, wobei Informationsinhalt des Codes in einer Datenbank mit Herstellungsparametern oder anderen Parametern verknüpft werden. Wenn zu einem späteren Zeitpunkt eine Holzwerkstoffplatte geprüft werden soll, wird der optische Code gescannt und über den Informationsgehalt des Codes und unter Hinzunahme der Datenbank, werden die Herstellungsparameter oder anderen Parameter der geprüften Holzwerkstoffplatte zugeordnet. Die geprüfte Holzwerkstoffplatte ist also charakterisierbar.

Problematisch bei dem zuvor beschriebenen Verfahren ist jedoch, dass das Aufbringen des Codes auf der Seitenkante der Holzwerkstoffplatte erfolgt und dabei entweder ein Trägermaterial wie ein Aufkleber aufgebracht werden muss oder der Code direkt auf die Seitenkante aufgedruckt wird. In beiden Fällen kann der Code beschädigt und somit unbrauchbar werden und kann auch nicht wiederhergestellt werden. Die Lesbarkeit eines direkt auf die Seitenkante aufgedruckten Codes kann ebenfalls eingeschränkt sein.

Daher liegt der vorliegenden Erfindung das technische Problem zugrunde, das Identifizieren von Holzwerkstoffplatten zu verbessern und zu vereinfachen.

Das zuvor aufgeführte technische Problem wird erfindungsgemäß durch ein Verfahren zum Identifizieren von Holzwerkstoffplatten gelöst, bei dem mindestens ein Vergleichsbild für einen vorgegebenen Abschnitt einer Seitenkante für eine Mehrzahl von Holzwerkstoffplatten aufgenommen wird, bei dem ein Vergleichsdatensatz aus dem Vergleichsbild anhand der Struktur, insbesondere auf der Basis der Geometrie, der Topographie und/oder der Verteilung der Holzwerkstoffelemente, ermittelt und gespeichert wird, bei dem zu mindestens einem späteren Zeitpunkt ein Prüfbild für den vorgegebenen Abschnitt einer Seitenkante einer Holzwerkstoffplatte aufgenommen wird, bei dem ein Prüfdatensatz aus dem Prüfbild anhand der Struktur, insbesondere auf der Basis der Geometrie, Topographie und/oder der Verteilung der Holzwerkstoffelemente, in gleicher Weise wie bei den Vergleichsdatensätzen ermittelt wird, bei dem der Prüfdatensatz der geprüften Holzwerkstoffplatte mit den Vergleichsdatensätzen von mehreren Holzwerkstoffplatten verglichen wird und bei dem die geprüfte Holzwerkstoffplatte bei einer Übereinstimmung des Prüfdatensatzes mit einem Vergleichsdatensatz als die Holzwerkstoffplatte identifiziert wird, für die der Vergleichsdatensatz erzeugt worden ist.

Erfindungsgemäß ist erkannt worden, dass die sichtbare Struktur des Holzwerkstoffes, insbesondere an einer Seitenkante, bestehend aus den Holzwerkstoffelementen und optional auch aus den diese verbindenden Harzen und gegebenenfalls Zusatzstoffen, sowohl durch verschiedene Ausgangsmaterialien als auch durch zufällige, im Herstellungsprozess nicht kontrollierte Variationen der Beschaffenheit des Holzwerkstoffes so verschiedenartig aufgebaut ist, dass diese Struktur als Merkmal zum Identifizieren herangezogen werden kann. Somit können ohne jedes Aufbringen von Etiketten oder Aufdrucken von Codes oder anderen Kennzeichnungen einzelne Abschnitte der Seitenkanten an sich als Identifizierungsmerkmal genutzt werden.

Die Struktur wird hierbei beispielsweise durch die Formeigenschaften der Seitenkante wie beispielsweise die Eigenschaften der Holzwerkstoffelemente bestimmt, also deren Größe, deren individuelle und/oder gemeinsame Ausrichtung, die Variabilität der Größe, die Existenz und/oder Anzahl verschiedener Holzwerkstoffelementtypen, die Ausmaße der Abstände zwischen Holzwerkstoffelementen oder das Vorliegen und die Verteilung von nicht gefüllten Freiräumen zwischen den Holzwerkstoffelementen. Dabei können auch nicht nur einzelne Holzwerkstoffelemente unterschieden werden, vielmehr kann das Gesamtbild der Seitenkante als Struktur betrachtet werden. Darüber hinaus kann die Struktur zusätzlich oder alternativ durch das Tiefenprofil der Seitenkante bestimmt sein. Alternativ oder zusätzlich zu den Formeigenschaften kann die Struktur auch durch die Farbe und/oder die Helligkeit der Seitenkante bestimmt sein. Dies kann die Grundfarbe und Grundhelligkeit der Seitenkante sein, aber auch die Variabilität der Farbe und Helligkeit, die Farbe der Holzwerkstoffelemente oder der Zusatzstoffe.

Die Vergleichsdatensätze und der Prüfdatensatz werden in gleicher Weise berechnet, indem beispielsweise jeweils derselbe Algorithmus oder allgemein dieselbe Rechenvorschrift angewendet wird. Damit wird sichergestellt, dass bei zu unterschiedlichen Zeitpunkten vom gleichen vorgegebenen Abschnitt aufgenommene Vergleichsbilder und Prüfbilder zu möglichst gleichen bzw. zu identischen Vergleichsdatensätzen und Prüfdatensätzen führen. Die Datensätze können auch in gleicher Weise berechnet werden, indem beispielsweise leicht abweichende Rechenvorschriften angewendet werden, wenn sichergestellt werden kann, dass die Rechenvorschriften zu vergleichbaren Datensätzen führen.

Das Identifizieren kann dann ausgehend von dem Zeitpunkt nach der eigentlichen Herstellung der Werkstoffplatte und anschließend während der möglichen Weiterverarbeitung durch Beschichtung, Zwischenlagerung, Transport und Vertrieb bis hin zur Endverarbeitung erfolgen. Dazu wird der Schritt des Ermittelns des Vergleichsdatensatzes, bevorzugt so früh wie möglich, nach der Herstellung der Platten nach Verlassen der Pressanlage durchgeführt.

Ganz allgemein reicht es aus, bei jeder Holzwerkstoffplatte für einen Abschnitt ein Vergleichsbild aufzunehmen und weiter zu verarbeiten, wie es zuvor beschrieben worden ist. Das bedeutet aber auch, dass bei einem späteren Prüfen der Holzwerkstoffplatte der maßgebliche Abschnitt aufgefunden werden muss. Dazu kann der Abschnitt durch die Position einer Ecke der Holzwerkstoffplatte als Begrenzung der Seitenkante aufgefunden werden. Alternativ kann der Abschnitt auch durch eine optische Markierung auffindbar sein. Beispielsweise kann die Markierung als Rechteck aufgedruckt sein, die den Abschnitt umrandet. Die Markierung kann aber auch ein Logo sein, das den Abschnitt seitlich begrenzt, vorzugsweise durch eine Linie. Jedenfalls ist eine solche Markierung nur zur Bestimmung der Lage des maßgeblichen Abschnitts vorgesehen und dient nicht dazu, ein Identifizieren der damit versehenen Platte selbst zu ermöglichen.

In vorteilhafter Weise können Vergleichsbilder für mehrere Abschnitte an mindestens einer der Seitenkanten, insbesondere jeweils für mindestens einen Abschnitt an jeder Seitenkante, der Holzwerkstoffplatte aufgenommen und für jedes Vergleichsbild ein Vergleichsdatensatz ermittelt werden. Somit steigt die Anzahl der für eine spätere Prüfung möglichen Abschnitte und erleichtert die Durchführung der Prüfung vor Ort. Beispielsweise können bei einer rechteckigen Holzwerkstoffplatte alle angrenzend an jede Ecke in beiden Richtungen angeordneten Abschnitte verwendet werden, um Vergleichsbilder aufzunehmen. Dann sind keine Markierungen notwendig, da die Positionierung der Abschnitte durch die physischen Begrenzungen der Holzwerkstoffplatte vorgegeben ist. Insgesamt ergeben sich bei diesem Beispiel acht Vergleichsbilder mit jeweils einem Vergleichsdatensatz. Die Länge der Vergleichsbilder entlang der Seitenkante kann hierbei vorgegeben sein, so dass auch das der Ecke abgewandte Ende des Abschnitts ohne die Notwendigkeit einer Markierung bekannt ist. Diese Länge kann absolut oder auch relativ zur Plattendicke vorgegeben sein.

Bei einer weiteren Ausgestaltung des beschriebenen Verfahrens wird für einen Teil der mehreren Abschnitte mit Vergleichsdatensätzen, insbesondere an einem Abschnitt von mehreren Abschnitten mit Vergleichsdatensätzen, jeweils ein Prüfbild aufgenommen und ein Prüfdatensatz ermittelt. Somit reicht es aus, bei einer Holzwerkstoffplatte, für die mehrere Vergleichsdatensätze erstellt und gespeichert worden sind, nur für einen Teil der Abschnitte oder sogar nur für einen Abschnitt einen Prüfdatensatz für den Vergleich zu erstellen.

Eine weitere Ausgestaltung des Verfahrens besteht darin, dass Vergleichsbilder für eine Mehrzahl von Abschnitten in vorgegebenen Abständen entlang zumindest eines Teils einer Seitenkante aufgenommen und Vergleichsdatensätze für die Vergleichsbilder erzeugt werden und dass zu dem mindestens einen späteren Zeitpunkt ein Prüfbild in dem Bereich der Mehrzahl von Abschnitten der Seitenkante aufgenommen wird und ein Prüfdatensatz für den Vergleich mit den Vergleichsdatensätzen ermittelt wird. In diesem Fall können sich die Abschnitte auch überlappen, wenn ein Teil der Seitenkante oder die gesamte Seitenkante in den vorgegebenen Abständen in Abschnitte unterteilt wird. Die Abstände können dabei sogar so gering gewählt werden, dass zwei Abschnitte um eine Rastereinheit der Auflösung der anschließenden Bildauswertung beabstandet voneinander angeordnet sind. Die Anzahl der Abschnitte erhöht sich dadurch, jedoch kann an fast beliebiger Stelle entlang der Seitenkante ein Abschnitt für ein Prüfbild gewählt werden, wodurch das Prüfen der Holzwerkstoffplatte weiter vereinfacht wird.

Auch kann eine gesamte Seitenkante an einer oder mehreren Seiten, insbesondere die gesamte umlaufende Seitenkante umfassend alle Seitenkanten der Platte, als ein zusammenhängendes Vergleichsbild aufgenommen werden. Aus diesem zusammenhängenden Vergleichsbild können einzelne Vergleichsbilder generiert werden. Ebenso kann ein Vergleich zwischen einem Prüfbild und dem zusammenhängenden Vergleichsbild direkt, ohne vorherige Einteilung des zusammenhängenden Vergleichsbild erfolgen. Dies ist beispielsweise durch Template Matching möglich, bei dem in dem zusammenhängenden Vergleichsbild das Prüfbild gesucht wird. Auch kann umgekehrt ein zusammenhängendes Prüfbild aller Seitenkanten aufgenommen werden und darin Vergleichsbilder gesucht werden.

Da die Seitenkante selbst zum Identifizieren dient, ist es vorteilhaft, wenn nach einem Bearbeiten mindestens einer Seitenkante der Holzwerkstoffplatte für diese mindestens eine Seitenkante für mindestens einen Abschnitt mindestens ein Vergleichsbild aufgenommen wird und ein Vergleichsdatensatz ermittelt wird. Dabei bedeutet Bearbeiten insbesondere ein Abtragen von Material durch eine Oberflächenbehandlung, wodurch die oberflächlich sichtbare Struktur des Holzwerkstoffes verändert wird. Durch die Aufnahme eines erneuten Vergleichsbildes des veränderten Abschnittes und dem daraus erzeugten Vergleichsdatensatz bleibt das Identifizieren der Holzwerkstoffplatte möglich.

Dasselbe gilt nach einem Trennen einer der Holzwerkstoffplatten in mindestens zwei Teilformate, bei dem nach einem Trennen einer der Holzwerkstoffplatten in mindestens zwei Teilformate für jedes entstehende Teilformat an mindestens einer neu entstandenen Seitenkante der Teilformate für mindestens einen Abschnitt mindestens ein neues Vergleichsbild aufgenommen wird und ein neuer Vergleichsdatensatz ermittelt wird und bei dem für jedes Teilformat jeder neue Vergleichsdatensatz mit der ursprünglichen Holzwerkstoffplatte verknüpft wird. Die daraus entstehenden mindestens zwei Teilformate werden dann unabhängig voneinander mit einer ursprünglichen Holzwerkstoffplatte verknüpft, so dass jedes Teilformat der ursprünglichen Holzwerkstoffplatte zugeordnet werden kann.

Das zuvor erläuterte Aufnehmen der Vergleichsbilder erfolgt bevorzugt nach der Herstellung der Holzwerkstoffplatte, nach dem Zuschneiden auf die auszuliefernden Formate und weiter bevorzugt vor deren Weiterverarbeitung wie Beschichtung mit Farbaufträgen oder mit Papierschichten und/oder Imprägnaten. Dagegen kann es auch vorteilhaft sein, die Vergleichsbilder nach dem Beschichten aufzunehmenden, also in dem Zustand, in dem die Holzwerkstoffplatte zur Auslieferung in ein Lager verbracht oder bereits transportfähig gemacht wird. In den genannten Zeitpunkten weist die Holzwerkstoffplatte ihre finale Struktur der Seitenkanten unabhängig von weiteren Beschichtungen auf.

Vorzugsweise wird die Holzwerkstoffplatte an einer Oberseite mit einer Schicht oder an beiden Oberseiten mit unterschiedlichen Schichten beschichtet, die in einer Seitenansicht unterschieden werden können. Dann kann es vorteilhaft sein, das mindestens eine Vergleichsbild erst nach der Beschichtung zu erzeugen, so dass anhand der seitlich sichtbaren Beschichtung bzw. der Beschichtungen die Ausrichtung der Holzwerkstoffplatte bestimmt und berücksichtigt werden kann.

Darüber hinaus können an mehreren Stationen des Herstellungsprozesses Vergleichsbilder aufgenommen werden, vorzugsweise immer kurz vor und/oder kurz nachdem sich das Erscheinungsbild der Seitenkante durch einen Herstellungsschritt geändert haben könnte. Somit lässt sich über die gesamte Fertigungskette eine Nachverfolgbarkeit realisieren.

Die zuvor genannten Vergleichsbilder und Prüfbilder, zusammenfassend auch im Folgenden Bilder genannt, können mit herkömmlichen Kamerasystemen aufgenommen werden. Als Kameras kommen sämtliche 2D Bildkameras wie CCD-Kameras, Spiegelreflexkameras (DSLR), spiegellose Systemkameras (DSLM) oder Smartphone-Kameras, letztere insbesondere bei der Erstellung der Prüfbilder in Frage. Zudem stehen spektrale Kameras zur Verfügung, die jeden Bildpunkt über eine spektrale Messmethode in ein mehrkanaliges Spektrum zerlegen und speichern, wobei aus den spektralen Informationen pro Bildpunkt ein Helligkeits- und Farbwert im RGB-Farbraum mit den Werten für rot (R), grün (G), blau (B) oder im L*a*b*-Farbraum mit Pixelwerten L* (Helligkeit), a* (rot-grün-Wert), oder b* (blau-gelb-Wert) oder in anderen Farbräumen abgeleitet werden. Die Nutzung einer spektralen Kamera hat den Vorteil, dass die Helligkeits- und Farbwerte genauer erfasst und abgebildet werden können.

Die zuvor genannten Vergleichsbilder und Prüfbilder können unter einer künstlichen Beleuchtung aufgenommen werden. Die Beleuchtung kann vorzugsweise für jede einzelne Aufnahme im Wesentlichen identisch sein und kann direkt in der Nähe der Kamera angeordnet sein. Andere Lichtquellen wie Sonneneinstrahlung durch ein Fenster, die Beleuchtung der Fertigungshalle, etc. sollten dabei abgeschirmt werden, so dass nur die Beleuchtung den aufzunehmenden Kantenbereich erhellt.

Zudem kann die Kante auch in einer geschlossenen Kammer aufgenommen werden oder Kamera, Beleuchtung und Seitenkante sind im Moment der Aufnahme gemeinsam von einem lichtundurchlässigen Gehäuse eingeschlossen. Auf diese Weise wird sichergestellt, dass nur Unterschiede der Seitenkante zu Unterschieden der Vergleichs- und Prüfbilder führen und nicht außerdem eventuelle Störeinflüsse von umliegenden Lichtquellen die Aufnahme verfälschen. Somit können auch kleine Unterschiede in der Farbe, Helligkeit, Struktur, etc. der Seitenkanten verlässlich unterschieden werden. Die Lichtquelle kann dabei an die Beschaffenheit der Seitenkante und/oder der Kamera angepasst werden. Ebenso können mehrere Bilder bei verschiedener Beleuchtung, beispielsweise bei verschiedenen Wellenlängen, aufgenommen und kombiniert werden.

Die Ermittlung eines Vergleichsdatensatzes aus den Vergleichsbildern kann in unterschiedlicher Weise erfolgen. Grundsätzlich gilt, dass jede Ermittlungsmethode, die zu einem Wert oder zu Werten führt, die in einem anschließenden Vergleichsalgorithmus verwendet werden können, geeignet ist, bei dem beschriebenen Verfahren angewendet zu werden.

Ein erstes Ausführungsbeispiel einer Ermittlungsmethode besteht darin, dass in jedem Bild die erfasste Struktur des Holzwerkstoffes analysiert wird, vorzugsweise mit einem oder mehreren an sich bekannten Bildauswerteprogrammen. Beispielsweise können hier OpenCV, scikit-image, Google Cloud Vision API, Microsoft Computer Vision API, vlfeat, dlib, Matlab Image Processing Toolbox genannt werden.

Aus der analysierten Struktur der Holzwerkstoffelemente werden dann Strukturwerte durch die Form, den Umfang, die Fläche, die Länge, zu bestimmen als längste Erstreckung der Form, und/oder die Ausrichtung, zu bestimmen als die Richtung der längsten Erstreckung der Form, der Holzwerkstoffelemente in Bezug auf die Abmessungen des aufgenommenen Abschnitts der Seitenkante bestimmt. Der Vergleichsdatensatz und der Prüfdatensatz werden danach als eine Abfolge von Strukturwerten für einen vorgegebenen Anteil der Holzwerkstoffelemente ermittelt. Die notwendige Anzahl der Strukturwerte für jedes Bild ist abhängig von der Individualität der Holzwerkstoffelemente und wird anwendungsbezogen bestimmt. Jedenfalls sind die Strukturwerte maßgeblich für die Identifizierbarkeit des Abschnitts und somit der Holzwerkstoffplatte. Es kann dabei deren Reihenfolge in der Abfolge von Strukturwerten maßgeblich oder irrelevant sein.

Beispielsweise kann für eine vorgegebene Anzahl von Holzwerkstoffelementen der Größe nach die Länge und der Winkel zur Seitenkantenerstreckung ermittelt werden und mathematisch in einen einzelnen Wert umgewandelt werden, vorzugsweise durch Summenbildung. Werden dann n Abschnitte ausgewertet, beispielsweise n=4, so ergeben sich 4 Werte, die zu einem 4-dimensinalen Vektor zusammengesetzt werden können. Ein solcher n-dimensionaler Vektor dient dann als Vergleichsdatensatz und kann mit einem entsprechend ermittelten Prüfdatensatz im n-dimensionalen Raum verglichen werden.

Bei einer weiteren bevorzugten Ausführungsform des beschriebenen Verfahrens besteht die Ermittlungsmethode darin, dass jedes Bild entsprechend eines vorgegebenen Rasters in Bezug auf die Ausrichtung des Abschnitts der aufgenommenen Seitenkante in Pixelbereiche unterteilt wird, bei dem jedem Pixelbereich ein aus den einzelnen Pixeln errechneter, vorzugsweise gemittelter Pixelwert, also ein Helligkeitswert und/oder mindestens ein Farbwert, zugeordnet wird und bei dem der Vergleichsdatensatz bzw. der Prüfdatensatz als eine Abfolge von Pixelwerten in einer vorgegebenen Reihenfolge aus den Pixelbereichen ermittelt wird.

Somit wird ein Raster von beispielsweise N x M Bildpunkten mit einer Abstufung von 256 Graustufenwerten ermittelt, dessen Bildpunkte jeweils die genannten Pixelbereiche repräsentieren. Der jeweilige Graustufenwert eines Pixelbereiches kann durch Mittelwertbildung oder eine andere mathematische Methode ermittelt werden und stellt eine gemittelte Graustufe der Helligkeitsinformationen oder einer der Farbinformationen der Pixel dar. Werden die Graustufenwerte in einer vorgegebenen Reihenfolge aneinander gereiht, so ergibt sich ein charakteristischer Vergleichsdatensatz bzw. Prüfdatensatz, der dem nachfolgenden Vergleichsschritt zugrunde gelegt werden kann. Auch hierbei kann man mathematisch gesehen einen Vektor mit N x M Vektorkomponenten definieren, die dann auch als Matrix aufgefasst werden können. Aus der Matrix lässt sich dann wieder durch Mittelwertbildung jeder Zeile ein Vektor erzeugen.

Die Bilder können zuvor mittels eines optischen Filters oder eines Softwarefilters vorbereitet bzw. vorbearbeitet werden. Beispielsweise kann ein Kantenfilter eingesetzt werden, um die Ausrichtung von Holzfasern stärker hervorzuheben.

Eine weitere Ausgestaltung des beschriebenen Verfahrens besteht darin, dass die Bilder, also die Vergleichsbilder und die Prüfbilder, jeweils mit einer 3D-Kamera aufgenommen werden. Ein Beispiel einer 3D-Kamera ist eine LIDAR-Kamera als eigenständige Kamera oder als Teil eines Smartphones. LIDAR ist die Abkürzung von LIght Detection And Ranging. Ein anderes Beispiel einer 3D-Kamera weist zwei seitlich versetzt angeordnete Kameras auf.

Der Verfahrensschritt zur Bestimmung des Bilddatensatzes erfolgt zunächst dadurch, dass zu jedem Bild die Topographie, also ein Höhenprofil senkrecht zur Oberflächenausrichtung der Seitenkante, ermittelt wird. Anschließend werden aus der Topographie ein Höhenlinienprofil, Abschnitte des Höhenprofils, eine Dreiecksvermaschung oder Abschnitte der Dreiecksvermaschung als Topographiewerte abgeleitet und der Vergleichsdatensatz bzw. der Prüfdatensatz wird als eine Abfolge von Topographiewerten in vorgegebener Reihenfolge aus der Topographie ermittelt.

Somit bestehen die Vergleichsdatensätze und die Prüfdatensätze aus einer Abfolge von charakteristischen Parametern der Topographie, die ein Identifizieren der Holzwerkstoffplatte ermöglichen. Die Abfolge der Parameter lässt sich bei dem Vergleichsschritt mittels eines geeigneten Algorithmus verarbeiten.

Nach der Ermittlung eines Prüfdatensatzes wird ein Vergleich mit den in einer Datenbank gespeicherten Vergleichsdatensätzen durchgeführt, um bei einer ausreichenden Übereinstimmung, gegebenenfalls innerhalb vorgegebener Parametergrenzen, ein Identifizieren der Holzwerkstoffplatte zu erreichen.

Der Vergleich zwischen dem Prüfdatensatz und den Vergleichsdatensätzen erfolgt mittels mathematischer Methoden.

In einer ersten bevorzugten Weise wird mit einem Algorithmus ein mathematisch definierter Abstand zwischen den Vergleichsdatensätzen und den Prüfdatensätzen berechnet, und anschließend wird der Abstand mit einem Schwellenwert verglichen. Wenn der berechnete Abstand geringer als der Schwellenwert ist, kann eine Übereinstimmung festgestellt werden. Damit wird ein deterministisches Verfahren durchgeführt, das durch eine unmittelbare Vorschrift des gewählten Algorithmus vorgegeben ist. Auch kann ohne einen Schwellwert der Vergleichsdatensatz, der von allen Vergleichsdatensätzen den geringsten Abstand zu dem Prüfdatensatz aufweist, als beste Übereinstimmung ausgewählt werden.

Ein Algorithmus ist dabei allgemein als eine eindeutige Handlungsvorschrift zur Lösung eines Problems oder einer Klasse von Problemen zu verstehen. Algorithmen bestehen aus endlich vielen definierten Einzelschritten. Damit können sie insbesondere auch zur Ausführung in ein Computerprogramm implementiert werden. Bei der Problemlösung wird eine bestimmte Eingabe in eine bestimmte Ausgabe überführt. Im Falle der unten beschriebenen Anwendung von neuronalen Netzwerken wird dann ein trainiertes neuronales Netzwerk anstelle eines zuvor genannten Algorithmus verwendet. Ein fertig trainiertes Netzwerk ist dann auch ein definiertes System, aber eine Beschreibung als Algorithmus ist hierbei nicht gegeben.

In einer weiteren Ausgestaltung des beschriebenen Verfahrens wird mindestens ein neuronales Netzwerk eines Systems für maschinelles Lernen verwendet.

Grundsätzlich erlaubt ein System für maschinelles Lernen den Einsatz einer Musteranalyse und einer Mustererkennung. Die dabei angewandte visuelle Intelligenz ermöglicht es, Bilder beziehungsweise Formen zu erkennen und zu analysieren. Als Anwendungsbeispiele seien hier allgemein die Handschrifterkennung oder das Identifizieren von Personen durch Gesichtserkennung genannt.

Neuronale Netze sind Netze aus künstlichen Neuronen und stellen einen Zweig der künstlichen Intelligenz dar. Die Topologie eines neuronalen Netzes besteht aus der Zuordnung von Verbindungen zu Knoten und wird für die spezifische Aufgabe trainiert, wobei das Netz durch folgende Methoden trainiert werden kann.

Einerseits kann die Entwicklung neuer Verbindungen, das Löschen existierender Verbindungen, das Ändern der Gewichtung durch Gewichtsfaktoren wᵢⱼ von Neuron j zu Neuron i, das Anpassen der Schwellenwerte der Neuronen, sofern diese Schwellwerte besitzen, wobei erst bei Erreichen des Schwellenwertes das Neuron ein Signal an ein anderes Neuron abgibt, das Hinzufügen oder das Löschen von Neuronen sowie die Modifikation von Aktivierungs-, Propagierungs- oder Ausgabefunktionen angewendet werden, um das neuronale Netzwerk zu trainieren.

Andererseits wird ein neuronales Netz beim Training nicht selbstständig Änderungen an seiner eigenen Topologie vornehmen. Vielmehr probiert man zum Teil automatisiert verschiedene Topologien aus und lässt das neuronale Netz lernen, indem man gewisse Parameter innerhalb des Netzes anpassen lässt, was letztlich jeweils einem Lernschritt entspricht.

Außerdem verändert sich das Lernverhalten bei Veränderung der Aktivierungsfunktion der Neuronen oder der Lernrate des neuronalen Netzes. Praktisch gesehen lernt ein Netz hauptsächlich durch Modifikation der Gewichte der Neuronen. Eine Anpassung des Schwellwertes kann hierbei parallel erfolgen.

In künstlichen neuronalen Netzen bezeichnet die Topologie die Struktur des Netzes. Damit ist im Allgemeinen gemeint, wie viele künstliche Neuronen sich auf wie vielen Schichten befinden, und wie diese miteinander verbunden sind. Künstliche Neuronen können auf vielfältige Weise zu einem künstlichen neuronalen Netz verbunden werden. Dabei werden Neuronen bei vielen Modellen in hintereinander liegenden Schichten angeordnet.

Das Training eines neuronalen Netzwerkes erfolgt mit einer möglichst großen Anzahl von Vergleichsbildern bzw. Vergleichsdaten, beispielsweise von 1.000 oder 10.000 Bildern. Als Eingabedaten in das neuronale Netzwerk können für das Training die gesamten Bilddaten oder eine mathematische Repräsentation der Bilddaten verwendet werden. Vorzugsweise werden als Vergleichsdatensätze die Graustufendaten im Raster der Vergleichsbilder dem neuronalen Netzwerk eingespeist. Dabei werden die Graustufen - wie oben bereits erläutert - in einem Wertebereich von beispielsweise 256 Graustufen zugeordnet.

Insbesondere kann ein neuronales Netz, vorzugsweise ein Convolutional Neural Network (CNN), zunächst auf eine Vielzahl von Seitenkantenbildern in Form eines Autoencoders trainiert werden, um eine mathematische Repräsentation der Daten wie beispielsweise Graustufendaten zu erhalten. Hierbei werden die Bilder der Seitenkanten in einem Encoder in eine Merkmalsrepräsentation überführt, deren Merkmale daraufhin gelernt werden, dass ausgehend von ihnen in einem Decoder wieder das ursprüngliche Bild zurückgewonnen werden kann. Auf diese Weise wird eine fehlertolerante Merkmalsrepräsentation der Holzstruktur generiert. Jeder Vergleichsdatensatz und jeder Prüfdatensatz wird im Folgenden durch den Encoder in die Merkmalsrepräsentation überführt. Die Prüfsätze können somit in einem an die Holzstruktur angepassten Merkmalssatz mit den Vergleichsdatensätzen verglichen werden, ohne dass Merkmale manuell definiert werden müssten.

Um eine fehlertolerante, mathematische Repräsentation der Bilder erzeugen zu können, können beim beschriebenen Verfahren auch Autoencoder und Decoder eingesetzt werden, welche eventuelle Fehler im ursprünglichen Bild ausgleichen und somit eine fehlerreduzierte Bildvariante zum Training an das eigentliche neuronale Netzwerk weitergeben.

Alternativ zu einem neuronalen Netz können auch andere Methoden des maschinellen Lernens (zum Beispiel Support Vektor Machines) oder mathematische Methoden eingesetzt werden.

Des Weiteren kann beispielsweise eine Kreuzkorrelation zwischen zwei Bildern, das der Prüfdaten und das der Vergleichsdaten, berechnet werden. Alternativ können andere Metriken wie ein Root Mean Square Error oder eine Kosinus-Ähnlichkeit verwendet werden. Bei einer ausreichend hohen Ähnlichkeit kann eine Übereinstimmung erkannt werden. Für die Verwendung einiger Metriken kann es sinnvoll sein, die Pixel aus einer zweidimensionalen Matrix-Anordnung mittels einer festgelegten Operation in eine eindimensionale Vektor-Anordnung zu überführen. Die Prüf- und Vergleichsdaten können auch mittels vorgegebener Bild-Merkmale wie beispielsweise einer Entropie, einer Verteilung von zusammenhängenden Bereichen oder einer dominanten Faser-Ausrichtung charakterisiert werden. Anhand dieser Merkmale kann dann ein Vergleich zwischen den Merkmalswerten eines vorliegenden Prüfbildes und verschiedener Vergleichsbilder durchgeführt werden.

Das oben aufgezeigte technische Problem wird nun erfindungsgemäß durch ein Verfahren zum Identifizieren von Holzwerkstoffplatten gelöst, bei dem für eine Mehrzahl von Holzwerkstoffplatten für jede Holzwerkstoffplatte mindestens eine Klassifizierung ermittelt und gespeichert wird, bei dem mindestens ein Vergleichsbild für einen vorgegebenen Abschnitt einer Seitenkante jeder Holzwerkstoffplatte aufgenommen wird, bei dem ein Vergleichsdatensatz aus dem Vergleichsbild anhand der Struktur, insbesondere auf der Basis der Geometrie, der Topographie und/oder der Verteilung der Holzwerkstoffelemente ermittelt und gespeichert wird, bei dem ein neuronales Netzwerk eines Systems für maschinelles Lernen mit den Vergleichsdatensätzen mit der Vorgabe trainiert wird, dass jeder eingespeiste Vergleichsdatensatz einer Klassifizierung zugeordnet ist, bei dem zu mindestens einem späteren Zeitpunkt ein Prüfbild für den vorgegebenen Abschnitt einer Seitenkante einer Holzwerkstoffplatte aufgenommen wird, bei dem ein Prüfdatensatz aus dem Prüfbild anhand der Struktur, insbesondere auf der Basis der Geometrie, Topographie und/oder der Verteilung der Holzwerkstoffelemente in gleicher Weise wie bei den Vergleichsdatensätzen ermittelt wird, und bei dem jedem Prüfdatensatz mit dem trainierten neuronalen Netzwerk eine der Klassifizierungen zugeordnet wird.

Somit kann durch das beschriebene Verfahren - ähnlich wie bei einer Schriftzeichenerkennung - während des Trainings des neuronalen Netzwerkes einer Mehrzahl von Vergleichsbildern eine Klassifizierung, beispielsweise ein Herstellungsort oder ein Herstellungszeitraum zugeordnet werden. Mit dem trainierten neuronalen Netzwerk wird dann ein Prüfbild einer Klassifizierung zugeordnet. Die Identifizierung besteht also lediglich in der Klassifizierung, ohne dass dabei eine eindeutige Zuordnung mit einer spezifischen Holzwerkstoffplatte erfolgt.

Das oben aufgezeigte technische Problem wird erfindungsgemäß auch durch ein Verfahren zum Identifizieren von Holzwerkstoffplatten, bei dem mindestens ein Vergleichsbild für einen vorgegebenen Abschnitt einer Seitenkante jeder Holzwerkstoffplatte aufgenommen wird, bei dem ein Vergleichsdatensatz aus dem Vergleichsbild anhand der Struktur, insbesondere auf der Basis der Geometrie, der Topographie und/oder der Verteilung der Holzwerkstoffelemente ermittelt und gespeichert wird, bei dem ein neuronales Netzwerk eines Systems für maschinelles Lernen mit den Vergleichsdatensätzen mit der Vorgabe trainiert wird, dass jeder eingespeiste Vergleichsdatensatz unterschiedlich zu allen anderen Vergleichsdatensätzen ist, bei dem nach Abschluss des Trainings für alle Vergleichsdatensätze ein mathematischer Vergleichswert, beispielsweise eine Zahl oder ein Vektor, erzeugt und abgespeichert wird, bei dem zu mindestens einem späteren Zeitpunkt ein Prüfbild für den vorgegebenen Abschnitt einer Seitenkante einer Holzwerkstoffplatte aufgenommen wird, bei dem ein Prüfdatensatz aus dem Prüfbild anhand der Struktur, insbesondere auf der Basis der Geometrie, Topographie und/oder der Verteilung der Holzwerkstoffelemente in gleicher Weise wie bei den Vergleichsdatensätzen ermittelt wird, bei dem für jeden Prüfdatensatz mit dem trainierten neuronalen Netzwerk ein mathematischer Prüfwert, beispielsweise eine Zahl oder ein Vektor, erzeugt und abgespeichert wird und bei dem die geprüfte Holzwerkstoffplatte bei einer Übereinstimmung des mathematischen Prüfwertes mit einem Vergleichswert als die Holzwerkstoffplatte identifiziert wird, für die der Vergleichsdatensatz erzeugt worden ist.

Somit wird - ähnlich wie bei einer Gesichtserkennung - ein siamesisches neuronales Netzwerk eingesetzt, um eine Übereinstimmung eines Prüfbildes mit einem der Vergleichsbilder feststellen zu können.

Ein siamesisches neuronales Netzwerk besteht dabei aus zwei identischen Teilnetzen, auch bekannt als Zwillingsnetzwerke, die an ihren Ausgängen verbunden sind. Die Zwillingsnetzwerke haben nicht nur eine identische Architektur, sondern teilen auch dieselben Schwellenwerte und Gewichte. Sie arbeiten parallel und sind für die Erstellung von Vektordarstellungen für die Eingaben verantwortlich. Letztlich werden die jeweils vom neuronalen Netzwerk errechnete Zahlenwerte oder Vektoren miteinander verglichen, die durch die neuronalen Netzwerke - ähnlich einem Algorithmus - berechnet werden.

In der Praxis können die beiden neuronalen Netzwerke auch nicht zeitlich parallel eingesetzt werden, sondern wird zunächst ein neuronales Netzwerk mit einer Vielzahl von Vergleichsbildern trainiert. Der durch das Training festgelegte Aufbau des neuronalen Netzwerkes, insbesondere im Hinblick auf die Schwellenwerte der einzelnen Neuronen und der Gewichtungsfaktoren der Verbindungen zwischen den Neuronen, wird gespeichert und kann auf ein anderes neuronales Netzwerk bzw. das andere der siamesischen neuronalen Netzwerke übertragen werden.

Die nach Abschluss des Trainings mit zeitlichem Abstand jeweils ermittelten Vergleichswerte in Form von Zahlen oder Vektoren werden in einer Datenbank für einen späteren Vergleich mit Prüfwerten abgespeichert. Dazu wird in der laufenden Produktion jede neue Holzwerkstoffplatte mit Vergleichsbildern erfasst, die Berechnung der Zahlenwerte oder Vektoren mit dem trainierten Netzwerk durchgeführt und abgespeichert. Ebenso wird mit den Vergleichsbildern verfahren, die beim Training des neuronalen Netzwerkes verwendet worden sind. Zu diesen Holzwerkstoffplatten werden die Zahlenwerte oder Vektoren in gleicher Weise berechnet und abgespeichert.

Bei der Prüfung, ob ein Prüfbild einem Vergleichsbild entspricht, wird dann ein solches in gleicher Weise aufgebautes neuronales Netz verwendet, um aus dem Prüfbild bzw. dem Prüfdatensatz einen Prüfwert in Form einer Zahl oder eines Vektors zu errechnen. Der Prüfwert wird dann mit den Vergleichswerten in der Datenbank verglichen und bei einer ausreichenden Übereinstimmung kommt das siamesische neuronale Netzwerk zu einer Identifizierung einer Holzwerkstoffplatte. In bevorzugter Weise wird eine Kombination aus einer Klassifizierung durch das erstgenannte Verfahren und einer nachfolgenden Identifizierung durch das zweitgenannte Verfahren angewendet. Dadurch wird eine zu prüfende Holzwerkstoffplatte mittels des Prüfbildes zunächst einer Klassifikation, beispielsweise einem Herstellungsort, zugeordnet. Da somit eine Eingrenzung der Anzahl der möglichen Vergleichsbilder erreicht wird, kann für jede der möglichen Klassifikationseinheiten, hier der Herstellungsorte, eine geringere Menge an Vergleichsbildern für das Training des neuronalen Netzwerkes herangezogen werden, wodurch die Genauigkeit und die Trefferquote verbessert werden können.

Bei den zuvor genannten Verfahren ist eine Trefferquote, also die Anzahl der richtigen Zuordnungen anteilig an den gesamten Zuordnungen, im Bereich von größer als 80%, vorzugsweise größer als 90%, ausreichend für eine gute Funktionsweise, wenngleich eine größtmögliche Trefferquote angestrebt wird.

In weiter bevorzugter Weise wird das Verfahren durch die folgenden Schritte ergänzt. Für die Mehrzahl von Holzwerkstoffplatten wird, vorzugsweise zu Beginn des Verfahrens, ein Charakterisierungsdatensatz ermittelt und gespeichert, wobei jeder Vergleichsdatensatz mit dem Charakterisierungsdatensatz für die jeweilige Holzwerkstoffplatte verknüpft wird und bei dem der geprüften Holzwerkstoffplatte bei einer Übereinstimmung des Prüfdatensatzes mit einem Vergleichsdatensatz der mit dem Vergleichsdatensatz verknüpfte Charakterisierungsdatensatz zugeordnet wird.

Dabei können beide Datensätze separat gespeichert und mittels Pointer verknüpft sein, die Daten können aber auch als ein Datensatz gespeichert und insoweit verknüpft sein.

Die geprüfte Holzwerkstoffplatte wird somit durch weitere Daten und Informationen charakterisiert und die in dem Charakterisierungsdatensatz hinterlegten Informationen können für die weitere Logistik oder weitere Verarbeitung genutzt werden.

Als Charakterisierungsdaten können eines oder mehrere der folgenden Daten in den Charakterisierungsdatensatz zu Beginn oder ergänzend zu einem späteren Zeitpunkt geschrieben werden:
- Materialinformation zur Holzart bzw. zu Holzarten der eingesetzten Holzwerkstoffe,
- Materialinformationen zur Rezeptur der verwendeten Bindemittel und weiterer Additive,
- technische Datenblätter und Laborprotokolle
- Herstellungsparameter wie Temperatur, Druck und Zeitverlauf des Pressvorgangs,
- Produktionsdatum, Produktionszeit, Produktionsanlage und Produktionsstandort,
- Abmessungen bzw. Format, insbesondere Außenabmessungen und Schichtdicken,
- Art einer aufgebrachten Beschichtung bzw. eines Dekors,
- Zertifizierungen der Platte für das verwendete Holz nach den Normen FSC und PEFC für nachhaltige Waldwirtschaft und entsprechende ISO-Normen,
- Zertifizierungen der Platte in Bezug auf die Abgabe von flüchtigen Stoffen nach TSCA Title VI, CARB2 und CE,
- Lagerorte und Lagerzeiten sowie Transportwege und Transportzeiten,
- Berechtigungsinformationen für ein nachträgliches Auslesen der Datensätze

Das zuvor beschriebene Identifizieren kann somit zu einer zusätzlichen Zuordnung mindestens eines Datums der Charakterisierungsdaten zu einer geprüften Holzwerkstoffplatte führen. Die Zuordnung kann demnach eine Klassifizierung sein, in dem ein Produktionsort, Produktionsdatum, Produktionszeitpunkt und Produktionsanlage und/oder eine Holzart oder eine andere charakteristische Eigenschaft der geprüften Holzwerkstoffplatte zugeordnet wird. Diese Eigenschaft kann einer Vielzahl von Holzwerkstoffplatten zugeordnet werden, die somit klassifiziert werden.

In bevorzugter Weise wird bei einem Trennen der Holzwerkstoffplatte in mindestens zwei Teilformate der Charakterisierungsdatensatz um mindestens ein Datum ergänzt, das den Bearbeitungsschritt des Trennens der Holzwerkstoffplatte charakterisiert. Das mindestens eine zusätzliche Datum kann den Zeitpunkt der Bearbeitung und/oder die neuen Abmessungen der Teilformate enthalten. Die weiteren unveränderten Seitenkanten bleiben mit den bisherigen Vergleichsbildern und Vergleichsdatensätzen verknüpft, die jedoch auch mit dem geänderten Charakterisierungsdatensatz verknüpft werden müssen.

Die einer geprüften Holzwerkstoffplatte zugeordneten Charakterisierungsdatei mit den klassifizierenden und/oder weiter identifizierenden Informationen können in der Verwertungskette vom Hersteller bis zum Endkunden in verschiedener Weise mit weiteren Daten verknüpft und präsentiert werden.

Dabei wird davon ausgegangen, dass das Erfassen des Prüfbildes insbesondere bei einem Endkunden jeweils vor Ort aufgenommen wird, vorzugsweise mit einem mobilen Gerät wie einem Smartphone. Die für die Aufnahme des Prüfbildes benutzte Anwendung (App) wird vom Hersteller der Holzwerkstoffplatte bereitgestellt, so dass eine direkte Datenverbindung mit einem oder mehreren Servern des Herstellers hergestellt werden kann. Nach einer der zuvor beschriebenen Alternativen oder nacheinander durchgeführten Analysen erfolgt dann eine Charakterisierung bzw. Identifizierung der Holzwerkstoffplatte, so dass der Hersteller einerseits über den aktuellen Ort, den angemeldeten Benutzer und/oder die Art der Verwendung Daten erfassen kann. Andererseits kann der Hersteller weitere Daten zu dieser Holzwerkstoffplatte ermitteln und über die Anwendung (App) dem Benutzer präsentieren. In beiden Fällen ergibt sich ein Mehrwert, der durch die Anwendung einer der beschriebenen Verfahren ermöglicht wird.

Vorzugsweise können dem Benutzer zu der Holzwerkstoffplatte passende weitere Produktvorschläge unterbreitet werden. Beispielsweise können Vorschläge für weitere passende Produkte angezeigt werden, die mit der vorliegenden Holzwerkstoffplatte eingesetzt werden können, insbesondere unter Berücksichtigung des mit der Holzwerkstoffplatte verbundenen Dekors. Ebenso können die Vorschläge weitere Holzwerkstoffplatten, Schichtstoffe oder Fußbodenpaneele aufweisen.

Darüber hinaus können Inspirationen für den Benutzer angezeigt werden, beispielsweise Fotos von Raumsituationen und/oder Möbel, in denen die Holzwerkstoffplatte verbaut wurde oder werden soll.

Des Weiteren können auch betriebswirtschaftliche Informationen mit der Charakterisierung oder gegebenenfalls Identifizierung der Holzwerkstoffplatte verbunden werden. Beispielsweise kann die Übermittlung einer Rechnung des Händlers bzw. des Herstellers mit der Aufnahme und Analyse des Prüfbildes oder auch eine Reklamationsbearbeitung verknüpft werden. Zudem kann ein Originalitätsnachweis in Form eines Echtheitszertifikats übermittelt werden.

Ebenso kann das Kaufverhalten der Endabnehmer, beispielsweise eines Tischlers, erfasst werden, wenn die Holzwerkstoffplatte gescannt bzw. aufgenommen worden ist. Damit können individualisierte Angebote, Produktneuheiten oder Ähnliches zugesandt werden. Dadurch kann der Hersteller bzw. auch ein Händler Daten über die Verwendung, den Zeitpunkt der Verwendung und die Art des Einsatzes der Holzwerkstoffplatten ermittelt werden. Somit können unter anderem Informationen über das Bestellverhalten und über Lagerzeiten bei Händlern und Endabnehmern bis zur Verarbeitung erfasst werden.

Im Folgenden wird die Erfindung anhand von Ausführungsbeispielen mit Bezug auf die Zeichnung erläutert. In der Zeichnung zeigen
- Fig. 1 bis 4: eine schematische Darstellung und Tabellen für ein Ausführungsbeispiel eines erfindungsgemäßen Verfahrens mit Anwendung an einem Abschnitt einer Seitenkante einer Holzwerkstoffplatte und Auswertung geometrischer Größen der Spanverteilung,
- Fig. 5: eine schematische Darstellung für ein weiteres Ausführungsbeispiel eines erfindungsgemäßen Verfahrens mit Anwendung von vier Abschnitten einer Seitenkante einer Holzwerkstoffplatte,
- Fig. 6: eine schematische Darstellung für ein weiteres Ausführungsbeispiel eines erfindungsgemäßen Verfahrens mit Anwendung von zwei Abschnitten an jeder Ecke einer Holzwerkstoffplatte,
- Fig. 7: eine schematische Darstellung für ein weiteres Ausführungsbeispiel eines erfindungsgemäßen Verfahrens mit Anwendung einer Mehrzahl von Abschnitten an einer Seitenkante einer Holzwerkstoffplatte,
- Fig. 8: eine schematische Darstellung für ein weiteres Ausführungsbeispiel eines erfindungsgemäßen Verfahrens mit Anwendung an einem Abschnitt an einer Seitenkante einer Holzwerkstoffplatte und Auswertung eines Graustufenrasters der Spanverteilung,
- Fig. 9: eine schematische Darstellung für ein weiteres Ausführungsbeispiel eines erfindungsgemäßen Verfahrens mit Anwendung an einem Abschnitt an einer Seitenkante einer Holzwerkstoffplatte und Auswertung von Höhenprofildaten der Spanverteilung,
- Fig. 10: eine schematische Darstellung für ein weiteres Ausführungsbeispiel eines erfindungsgemäßen Verfahrens mit einer Auswertung von Datensätzen der Spanverteilung mit Hilfe eines Trainings eines neuronalen Netzwerkes mit einer Mehrzahl von Vergleichsdatensätzen,
- Fig. 11: das in Fig. 10 gezeigte neuronale Netzwerk bei einer Überprüfung eines Prüfdatensatzes,
- Fig. 12: eine schematische Darstellung für ein weiteres Ausführungsbeispiel eines erfindungsgemäßen Verfahrens mit einer Auswertung von Datensätzen der Spanverteilung mit Hilfe eines Trainings eines neuronalen Netzwerkes mit einer Mehrzahl von Vergleichsdatensätzen und
- Fig. 13: das in Fig. 12 gezeigte neuronale Netzwerk bei einer Überprüfung eines Prüfdatensatzes.

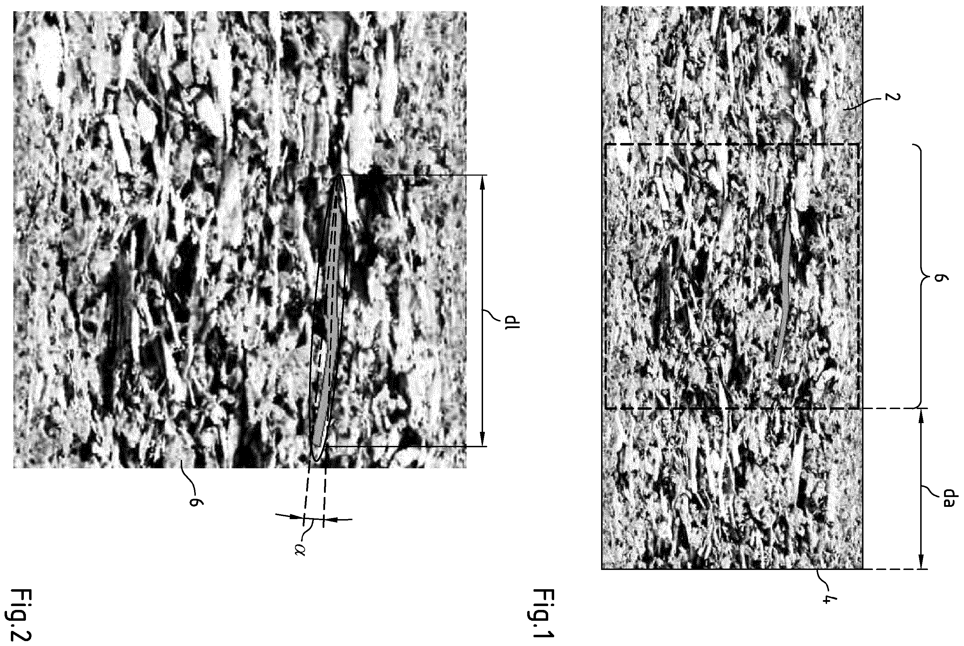

In den Fig. 1 bis 4 ist ein erstes Ausführungsbeispiel eines Verfahrens zum Identifizieren von Holzwerkstoffplatten dargestellt.

In Fig. 1 ist ein Photographie eines Stückes einer Seitenkante 2 einer Holzwerkstoffplatte in einer Seitenansicht dargestellt. Am rechten Rand der Ansicht ist eine rechtwinklige Ecke 4 angeordnet, die eine Referenz für ein Maß "da" verwendet werden kann, um die Position eines Abschnitts 6 festzulegen. Der Abschnitt 6 ist mit einer gestrichelten Hilfslinie gezeigt, die jedoch nicht auf der Seitenkante selbst angebracht ist. Die Seitenkante 2 ist nicht weiter bedruckt oder sonst markiert. Fig. 2 zeigt den Abschnitt 6 in einer separaten Ansicht

In einem weiteren Schritt des Verfahrens wird nun ein Vergleichsbild für den Abschnitt 6 der Seitenkante 2 mit einer nicht dargestellten Kamera aufgenommen und ausgewertet. Dazu wird eine herkömmliche Bildanalyse-Software benutzt wie beispielsweise OpenCV, scikit-image, Google Cloud Vision API, Microsoft Computer Vision API, vlfeat, dlib, Matlab Image Processing Toolbox, etc. und eine Anzahl von einzelnen Holzwerkstoffspäne erkannt. Die Umrisse der erkannten Späne werden zu einem Teil von der Software anhand vorgegebener Kriterien wie Größe oder Fläche bestimmt. Diese ist exemplarisch für einen langen Span in den Fig. 1 und 2 gezeigt, dessen Fläche durch eine konstante graue Einfärbung markiert ist.

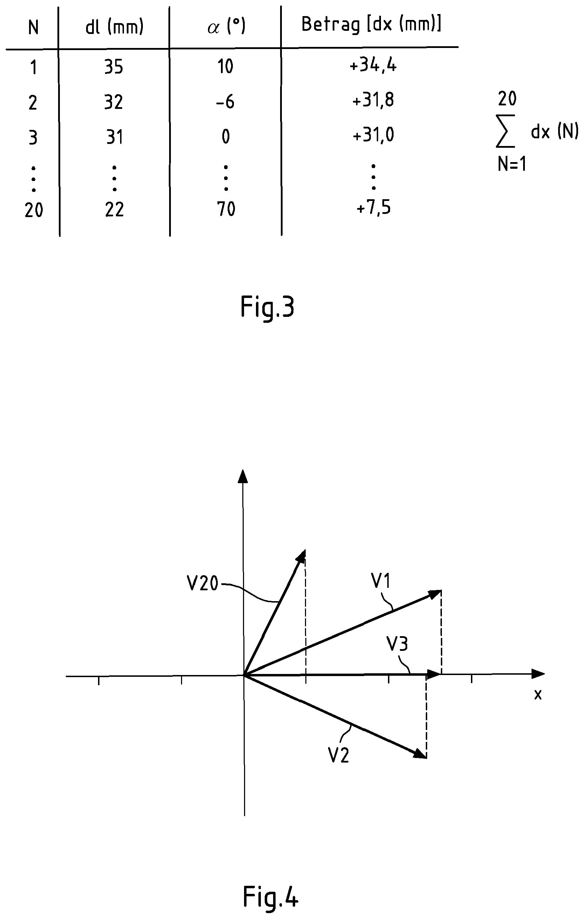

Wie in Fig. 2 für den ausgewählten Span gezeigt ist, werden die erkannten Späne nach Länge dl und Winkel α der Ausrichtung der Späne in Bezug auf die Erstreckungsrichtung (horizontal in Fig. 2) vermessen, die entsprechenden Daten für N=20 Späne sind in Fig. 3 als Tabelle zum Teil aufgelistet.

Fig. 4 zeigt die graphische Darstellung der Daten nach der Tabelle in Fig. 3, wobei die Länge dl in Richtung der x-Achse und der Winkel α relativ zur x-Achse als Vektoren eingezeichnet sind. Die entsprechenden Vektoren v₁, v₂, v₃ und v₂₀ sind in Fig. 4 eingezeichnet. Durch eine Projektion der Vektoren auf die x-Achse durch Berücksichtigung des Kosinuswertes zum Winkel α und Bildung des Absolutwertes (Betrag) ergeben sich dann die Werte Betrag dx in der rechten Spalte der Tabelle in Fig. 3.

Ein Vorteil der Betragsbildung bei den Werten dx(N) besteht darin, dass der Wert der gleiche ist, unabhängig von der Ausrichtung der Holzwerkstoffplatte bei der Aufnahme des Bildes.

Bildet man anschließend die Summe der Beträge dx über N=1 bis 20, so ergibt sich ein spezifischer Wert für den Abschnitt 6, der das Identifizieren der Holzwerkstoffplatte ermöglicht. Somit wird bei dem dargestellten und beschriebenen Verfahren ein Vergleichsdatensatz, hier als Summe der Werte N=1 bis 20 über die Beträge dx(N) sowie die Einzelwerte dx(N) aus dem Vergleichsbild anhand der Geometrie der Holzwerkstoffelemente der Späne ermittelt und gespeichert.

Zu mindestens einem späteren Zeitpunkt nach der Herstellung, also beispielsweise noch während der Lagerung im Herstellungsbetrieb, während des Transportes und weiterer Lagerung und/oder während des Einsatzes der Holzwerkstoffplatten für eine Weiterverarbeitung beispielsweise als Möbelplatte, wird ein Prüfbild für den vorgegebenen Abschnitt der Seitenkante einer Holzwerkstoffplatte aufgenommen.

Das Prüfbild wird einer gleichen Analyse, wie zuvor anhand der Fig. 1 bis 4 erläutert worden ist, unterzogen und ein Prüfdatensatz wird aus dem Prüfbild anhand der Geometrie der Holzwerkstoffelemente (Späne, Fasern) in gleicher Weise wie bei den Vergleichsdatensätzen ermittelt. Anschließend wird der Prüfdatensatz mit den in der Datenbank gespeicherten Vergleichsdatensätzen von der Vielzahl von Holzwerkstoffplatten verglichen. Die geprüfte Holzwerkstoffplatte wird dann bei einer Übereinstimmung des Prüfdatensatzes mit einem Vergleichsdatensatz als die Holzwerkstoffplatte identifiziert wird, für die der Vergleichsdatensatz erzeugt worden ist.

Das Prüfbild wird dabei bevorzugt mit einer gleichen Kamera und bei gleichen Belichtungssituationen aufgenommen. Das Verfahren kann aber auch so robust gegenüber Schwankungen sein, dass beispielsweise eine fest installierte Kamera nach der Herstellung der Holzwerkstoffplatte das Vergleichsbild aufnimmt, während das Prüfbild zu einem späteren Zeitpunkt mit einer mobilen Kamera, insbesondere auch mittels einer Kamera eines Smartphones aufgenommen werden kann.

Die Datenbank ist allgemein auf einem Server gespeichert, der über ein lokales Netzwerk der Herstellungsstätte und/oder über das Internet mit den Recheneinheiten für das Erstellen von Vergleichsdatensätzen und den Recheneinheiten für das Erstellen der Prüfdatensätze verbunden ist und einen Datenaustausch ermöglicht.

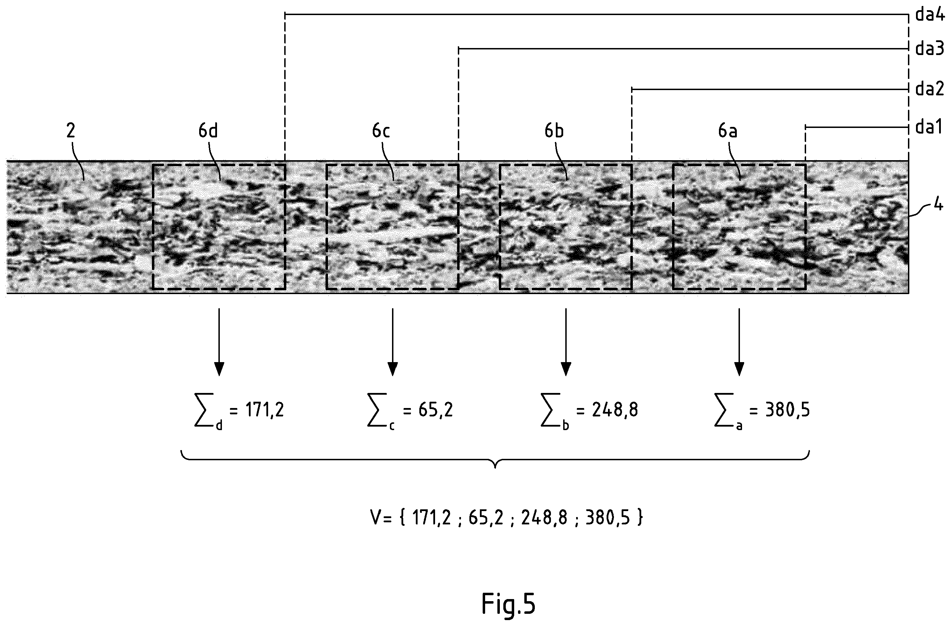

Fig. 5 zeigt ein weiteres Ausführungsbeispiel eines Verfahrens zum Identifizieren von Holzwerkstoffplatten, bei dem im Vergleich zum Beispiel nach den Fig. 1 bis 4 insgesamt vier Abschnitte 6a, 6b, 6c und 6d definiert werden, die mit den Abständen dai, da₂, da₃ und da₄ von der Ecke 4 beabstandet angeordnet sind.

Anschließend werden Vergleichsbilder für die vier Abschnitte 6a, 6b, 6c und 6d an der Seitenkante 2 aufgenommen und für jeden Abschnitt 6a, 6b, 6c und 6d wird in der zuvor erläuterten Weise eine Summe ∑ₐ, ∑_{b}, ∑_{c} und ∑_{d} gebildet. Die Zahlenwerte der vier Summen ∑ₐ, ∑_{b}, ∑_{c} und ∑_{d} werden dann in der Reihenfolge der Abschnitte in einen 4-dimensionalen Vektor V geschrieben, der den Vergleichsdatensatz bildet.

Bei einer späteren Überprüfung einer Holzwerkstoffplatte werden dann in gleicher Weise an einer vorgegebenen Seitenkante die in den vorgegebenen Abschnitten dai, da₂, da₃ und da₄ positionierten vier Abschnitte photographiert und, wie zuvor beschrieben, ausgewertet und ein Vektor V als Prüfdatensatz gebildet. Dieser Prüfdatensatz wird dann mit den in der Datenbank gespeicherten Vergleichsdatensätzen verglichen. Bei einer Übereinstimmung zwischen dem Prüfdatensatz und einem der Vergleichsdatensätze wird dann die geprüfte Holzwerkstoffplatte als die Holzwerkstoffplatte identifiziert, für die der Vergleichsdatensatz erzeugt worden ist.

Der Vergleichsdatensatz und der Prüfdatensatz sind somit als eine Abfolge von Strukturwerten ∑ₐ, ∑_{b}, ∑_{c} und ∑_{d} für einen vorgegebenen Anteil der Holzwerkstoffelemente ermittelt worden.

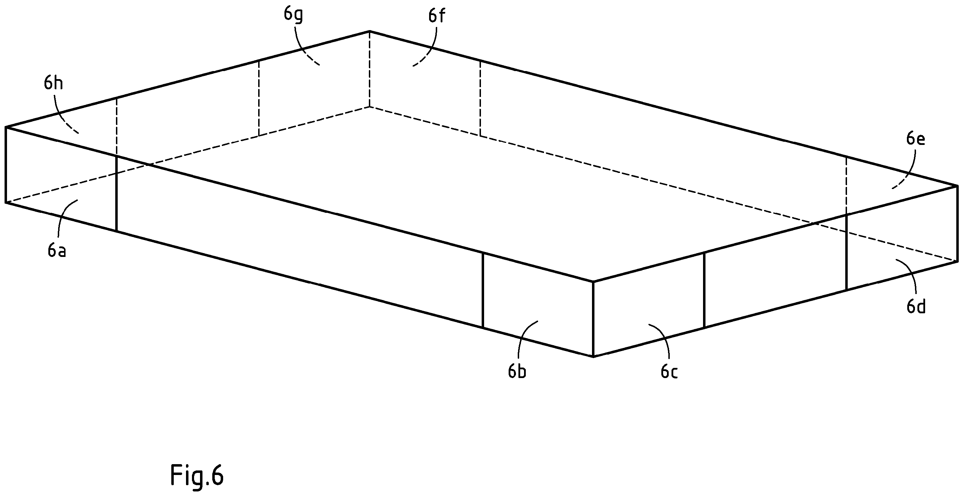

Fig. 6 zeigt ein weiteres Ausführungsbeispiel des Verfahrens zum Identifizieren von Holzwerkstoffplatten, bei dem an jeder der vier Ecken einer rechteckigen Holzwerkstoffplatte an jeder der beiden angrenzenden Seitenkanten, vorliegend angrenzend zur Ecke mit einem Wert für den Abstand da gleich Null, ein Abschnitt definiert. Somit werden acht Vergleichsbilder für acht Abschnitte 6a bis 6h erzeugt und weiter verarbeitet.

In dieser Weise ist jede Holzwerkstoffplatte so oft mit einem Vergleichsbild verknüpft, dass in einfacher Weise jede Holzwerkstoffplatte unabhängig von ihrer Lage identifizierbar ist. Wenn also für einen Prüfvorgang für nur einen der acht Abschnitte mit Vergleichsdatensätzen ein Prüfbild aufgenommen und ein Prüfdatensatz ermittelt wird, dann kann die Holzwerkstoffplatte gleichwohl identifiziert werden.

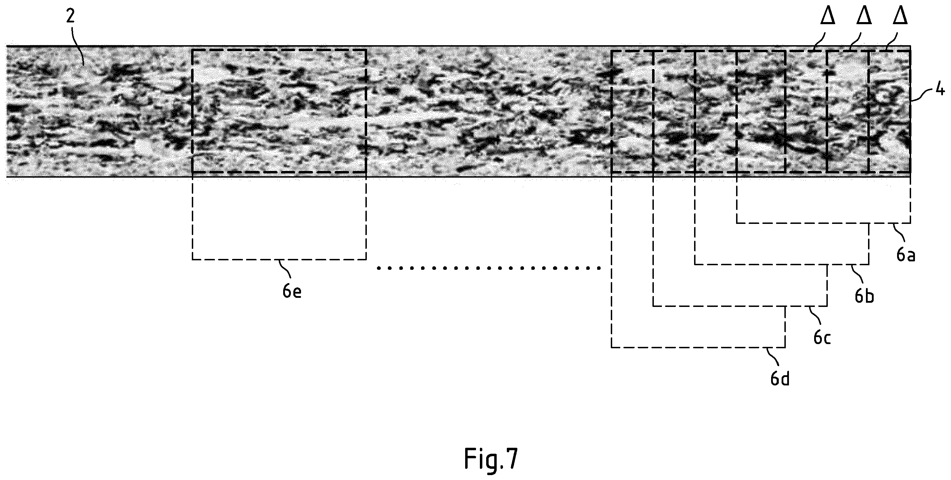

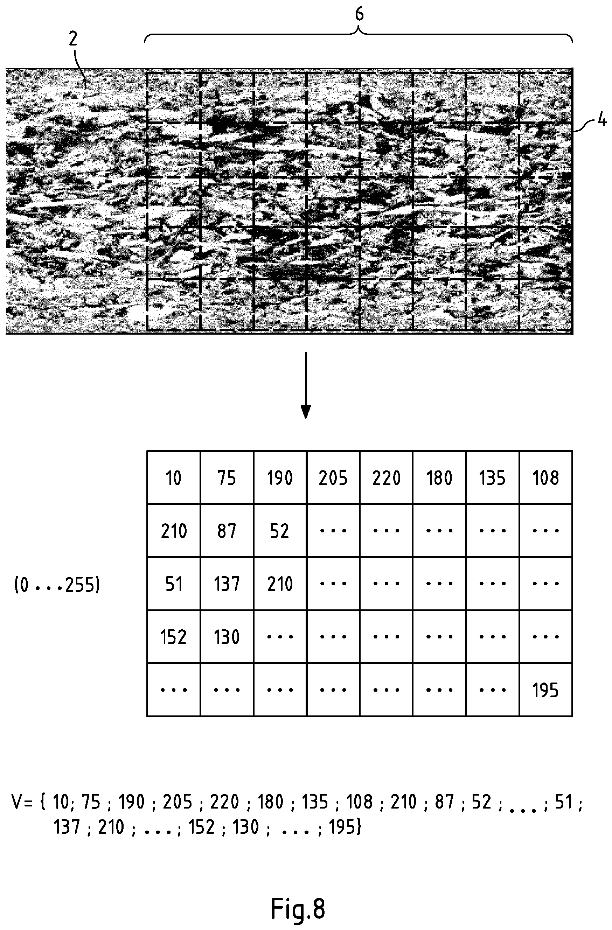

Fig. 7 zeigt ein weiteres Ausführungsbeispiel des Verfahrens, bei dem Vergleichsbilder für eine Mehrzahl von Abschnitten 6a bis 6e in vorgegebenen Abständen Δ entlang zumindest eines Teils einer Seitenkante 2 aufgenommen und Vergleichsdatensätze für die Vergleichsbilder erzeugt werden. Der vorgegebene Abstand kann dabei an der Auflösung der Vergleichsbilder bzw. an der räumlichen Auflösung einer aus den Vergleichsbildern ermittelten Graustufenverteilung, siehe die Diskussion der Fig. 8 unten, angepasst sein.

Zu dem mindestens einen späteren Zeitpunkt kann dann entsprechend dem Raster, also vorzugsweise willkürlich, ein Prüfbild in dem Bereich der Mehrzahl von Abschnitten der Seitenkante aufgenommen werden, ohne dass eine exakte Positionierung des aufgenommenen Prüfbildes erforderlich ist. Anschließend wird wieder ein Prüfdatensatz für den Vergleich mit den Vergleichsdatensätzen ermittelt. Die weitere Verarbeitung entspricht dann den vorigen Beispielen.

Da die Strukturen der Seitenkanten selbst für die Identifizierung herangezogen werden, ist es für eine Identifizierung erforderlich, dass die Strukturen erhalten bleiben bzw. nur in geringem Maße verändert werden. Wenn die Strukturen aber zu stark verändert werden, ist eine neue Erstellung von Vergleichsbildern und Vergleichsdatensätzen erforderlich. Daher wird bei einer weiteren Ausgestaltung des Verfahrens vorgesehen, dass nach einem Bearbeiten mindestens einer Seitenkante der Holzwerkstoffplatte für diese mindestens eine Seitenkante für mindestens einen Abschnitt mindestens ein Vergleichsbild aufgenommen und ein Vergleichsdatensatz ermittelt wird. Dabei bedeutet ein Bearbeiten insbesondere ein Abtragen von Material, beispielsweise ein Fräsen oder Schleifen.

Insbesondere gilt dieses auch dann, wenn die Holzwerkstoffplatte aufgetrennt wird und zwei oder mehr Teilformate zugeschnitten werden. Dann wird bei einer weiteren Ausgestaltung des Verfahrens vorgesehen, dass nach einem Trennen einer der Holzwerkstoffplatten in mindestens zwei Teilformate für jedes entstehende Teilformat an mindestens einer neu entstandenen Seitenkante der Teilformate für mindestens einen Abschnitt mindestens ein Vergleichsbild aufgenommen wird und ein Vergleichsdatensatz ermittelt wird.

Zuvor sind die Ausgestaltungen des Verfahrens beschrieben worden, bei denen 2D-Kameras zum Einsatz gekommen sind und bei denen in jedem Bild die erfasste Struktur des Holzwerkstoffes analysiert wird, bei dem aus der Struktur der Holzwerkstoffelemente Strukturwerte durch die Länge als längste Erstreckung in der Form und durch die Ausrichtung, also der Richtung der längsten Erstreckung in der Form der Holzwerkstoffelemente in Bezug auf die Abmessungen des aufgenommenen Abschnitts der Seitenkante die Vergleichsdatensätze und Prüfdatensätze bestimmt werden. Darüber hinaus kann auch alternativ oder zusätzlich durch die Form, durch den Umfang und/oder durch die Fläche der Holzwerkstoffelemente Information für die Vergleichsdatensätze und Prüfdatensätze gewonnen werden.

Die 2D-Bilder, also die Vergleichsbilder und die Prüfbilder, können mit herkömmlichen Kameras aufgenommen werden, beispielsweise allgemein CCD-Kameras, Spiegelreflexkameras (DSLR), spiegellose Systemkameras (DSLM) oder Kameras von mobilen Endgeräten wie Smartphones oder Tablets. Ein 2D-Bild kann aber auch mit einer für jeden Bildpunkt Spektraldaten ermittelnden spektralen Kamera gewonnen werden. Das Bild kann dabei im RGB-Farbraum mit den Werten für rot (R), grün (G) und blau (B) oder im L*a*b*-Farbraum mit Pixelwerte L*, a*, oder b* für Helligkeit (L*), rot-grün Farbintensität (a*) und blau-gelb Farbintensität (b*) oder in anderen Farbräumen gespeichert sein.

Ein weiteres Ausführungsbeispiel weist eine andere Bildanalyse auf, wobei nicht die vorhandenen Strukturen ermittelt werden, sondern bei dem - wie in Fig. 8 gezeigt ist - jedes Bild des Abschnitts 6 angrenzend an die Ecke 4 der Seitenkante 2 entsprechend eines vorgegebenen Rasters in Bezug auf die in Fig. 8 horizontale Ausrichtung des Abschnitts 6 in Pixelbereiche unterteilt wird. Jedes Quadrat des Rasters umfasst eine Mehrzahl von Pixel des aufgenommenen Bildes und stellt einen Pixelbereich dar. Jedem Pixelbereich wird dann ein aus den einzelnen Pixeln errechneter und gemittelter Pixelwert aus den Helligkeitswerten zugeordnet und der Vergleichsdatensatz bzw. der Prüfdatensatz wird dann als eine Abfolge von gemittelten Pixelwerten 10, 75, 190, 205, ... in einem Wertebereich von (0 ... 255) in einer vorgegebenen Reihenfolge aus den Pixelbereichen ermittelt. Daraus ergibt sich wieder ein Vektor V mit einer Vielzahl von Werten, der in Fig. 8 mit einer Reihe von Werten abschnittsweise gezeigt ist.

Anstelle eines Helligkeitswertes kann auch mindestens ein Farbwert eines Farbkanals als Pixelwert berechnet werden. Der so ermittelte Vergleichsdatensatz und der Prüfdatensatz werden dann in der oben beschriebenen Weise verarbeitet, um das Verfahren durchzuführen.

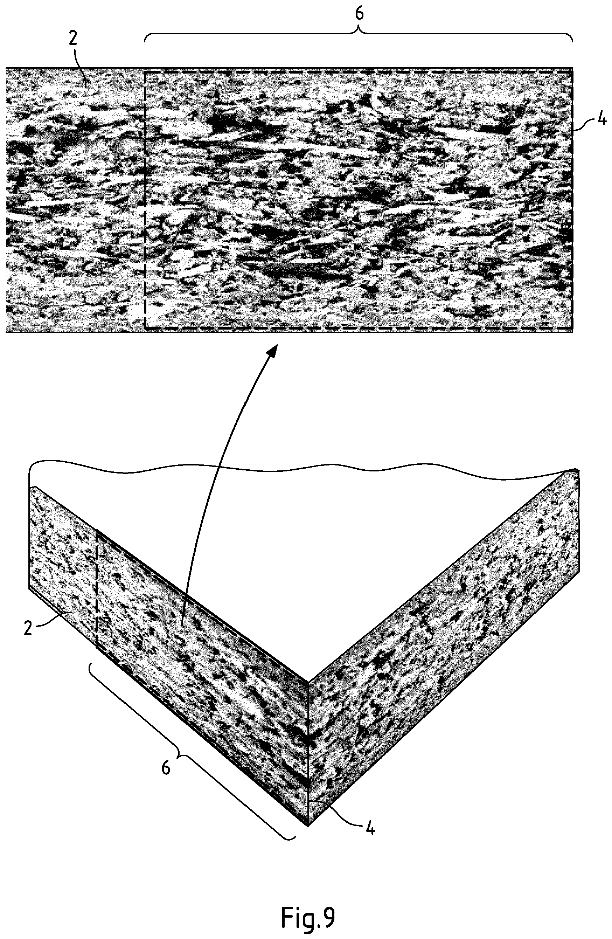

Eine weitere Ausgestaltung des Verfahrens zum Identifizieren von Holzwerkstoffplatten ist in Fig. 9 gezeigt. Dargestellt ist erneut die Seitenkante 2 der Holzwerkstoffplatte wie in Fig. 1, der gewählte Abschnitt 6 ist angrenzend an die Ecke 4 der Holzwerkstoffplatte angeordnet.

Bei dem Verfahren werden dann die Bilder, also die Vergleichsbilder und die Prüfbilder, jeweils mit einer 3D-Kamera aufgenommen werden, die als LIDAR-Kamera als eigenständige Kamera oder als Teil eines Smartphones oder als eine zwei Kameras aufweisende stereoskopische Kamera ausgebildet ist.

Zu jedem Bild wird dann die Topographie ermittelt und aus der Topographie wird ein diese Topographie wiedergebendes Profil erzeugt. Aus dem Profil können unterschiedliche Parameter wie das Höhenlinienprofil als Ganzes oder in Abschnitten, eine Dreiecksvermaschung oder Abschnitte der Dreiecksvermaschung als Topographiewerte abgeleitet werden und der Vergleichsdatensatz bzw. der Prüfdatensatz werden danach als eine Abfolge von Topographiewerten in vorgegebener Reihenfolge aus der Topographie ermittelt.

Ausgehend von einem Höhenprofil kann die Form der Höhenlinien direkt analysiert werden. Es können mehrere Schwarz-Weiß-Bilder generiert werden, wobei bei jedem Bild ein Höhenschwellwerten vorgegeben wird, und Bereiche schwarz gefärbt werden, deren Höhe unterhalb des Schwellwerts liegen und solche weiß gefärbt werden, deren Höhe größer oder gleich dem Schwellwert liegen. Hieraus können Eigenschaften der binären Bild-Elemente ausgewertet werden wie beispielsweise die größte zusammenhängende Fläche, die Verteilung der Größen von Einzelflächen und/oder das Verhältnis von Haupt- zu Nebenachsen in einzelnen Flächen.

Ebenso kann ein Tiefenbild in ein Graustufenbild überführt werden, das sich aus Pixeln zusammensetzt, die jeweils eine Tiefe des Oberflächenprofils beschreiben. Ein niedriger Wert nahe 0 kann beispielsweise Bereiche kennzeichnen, die nah an der vermessenden Kamera liegen, also nach an einer imaginären perfekt glatten Oberfläche. Höhere Werte >0 können für eine Vertiefung wie etwa einen Freiraum zwischen zwei Fasern stehen. Die Skala kann natürlich auch umgekehrt angelegt sein.

Auch kann die dreidimensionale Struktur direkt, ohne Überführung in ein zweidimensionales Äquivalent analysiert werden. Hierfür können verschiedene 3D-Kenngrößen herangezogen werden, insbesondere gemäß der Norm EN ISO 25178. Zur Auswertung einer dreidimensionalen Oberfläche werden Kenngrößen und Messverfahren spezifiziert, durch die die Oberflächen vermessen und somit zur Identifizierung verwendet werden können.

Neben der Auswertung von Höhenlinien der Topographie kann, wie erwähnt, auch aus einer großen Anzahl von Einzelpunkten, die die Oberfläche der Struktur der Seitenkante repräsentieren, ein digitales Modell erstellt werden. Das kann entweder durch eine Dreiecksvermaschung (Triangulated Irregular Network) erfolgen oder durch Approximation eines rechteckigen Gitternetzes. Dieses Höhenmodell wird mit einer horizontalen Ebene in der gewünschten Höhe geschnitten, das Ergebnis ist die Höhenlinie.

Als weitere Parameter können Amplitudenkenngrößen verwendet werden, die beispielsweise die Höhenstruktur der Oberfläche mit einzelnen Werten beschreiben und auf eine 2D-Profilschnittauswertung zurückgehen. Sie werden von der linienhaften 2D- auf die flächenhafte 3D-Auswertung übertragen. Weitere Parameter sind eine flächenbezogene arithmetische Mittenrauheit (Sa), eine flächenbezogene Kernrauheitstiefe (Sk), eine flächenbezogene gemittelte Rautiefe (Sz) oder ein flächenbezogener quadratischer Mittenrauwert (Sq). Da die Oberfläche der Seitenkante einer Holzwerkstoffplatte in diesen Parametern unterschiedliche Werte annehmen kann, kann in einem Raster, entsprechend dem Raster nach Fig. 8 für jedes Feld des Rasters einer oder mehrere dieser Parameter bestimmt werden, deren Zahlenwerte zusammen in einen spezifischen Vektor eingeschrieben werden.

Weitere räumliche Kenngrößen beschreiben das Strukturmuster der Oberfläche. Hierfür wird die Autokorrelationsfunktion ACF eingesetzt und als Parameter können, wieder bevorzugt in einem Raster, die Autokorrelationslänge (Sal) und/oder das Textur-Aspekt-Verhältnis (Str) verwendet werden.

Des Weiteren sind hybride Kenngrößen bekannt, die vertikale und räumliche Kenngrößen kombinieren, um die Steigung zu bestimmen. Als Parameter können dabei die mittlere quadratische Oberflächensteigung (Sdq) und/oder das Verhältnis der realen Oberfläche zur Messfläche (Sdr), erneut bevorzugt im Raster angeordnet, verwendet werden.

Bei den zuvor erläuterten Verfahren werden die Prüfdatensätze mit den Vergleichsdatensätzen verglichen, wobei bevorzugt mit einem Algorithmus ein mathematisch definierter Abstand zwischen den Vergleichsdatensätzen und den Prüfdatensätzen berechnet wird, bei dem der Abstand mit einem Schwellenwert verglichen wird und bei dem dann, wenn der Abstand geringer als der Schwellenwert ist, eine Übereinstimmung festgestellt wird.

Die Algorithmen können dabei unterschiedlich mathematisch formuliert sein und die Abstände durch verschiedene Approximationen berechnet werden.

Eine erste übliche Abstandsmetrik ist etwa ein Root Mean Square Error (RMSE), bei dem für jedes Element eine Differenz der Merkmalswerte zwischen den Prüf- und den Vergleichsdaten berechnet wird, diese Differenz quadriert, die quadrierten Differenzen für alle Merkmale aufaddiert und anschließend die Wurzel aus der Summe gezogen wird.

Alternativ kann eine Kosinus-Ähnlichkeit C verwendet werden, insbesondere wie folgt. Werte von -1 geben einen großen Unterschied an, Werte nahe 1 eine hohe Übereinstimmung.

Die zuvor beschriebenen Algorithmen verwirklichen eine direkte mathematische Beziehung zwischen den Eingabewerten und dem Ausgabewert, sie können insoweit deterministisch bezeichnet werden und mit einem Programm direkt berechnet werden.

Bei einer alternativen Ausgestaltung der beschriebenen Varianten des Verfahrens kann auch ein maschinell lernendes neuronales Netzwerk eingesetzt werden. Im beschriebenen Verfahren können verschiedene Arten neuronaler Netzwerke eingesetzt werden, beispielsweise auch Convolutional Neural Networks (CNN).

Allgemein können künstliche neuronale Netze auf der Vernetzung vieler McCulloch-Pitts-Neuronen oder leichter Abwandlungen davon basieren. Grundsätzlich können auch andere künstliche Neuronen Anwendung in künstlichen Intelligenzen finden, beispielsweise das High-Order-Neuron.

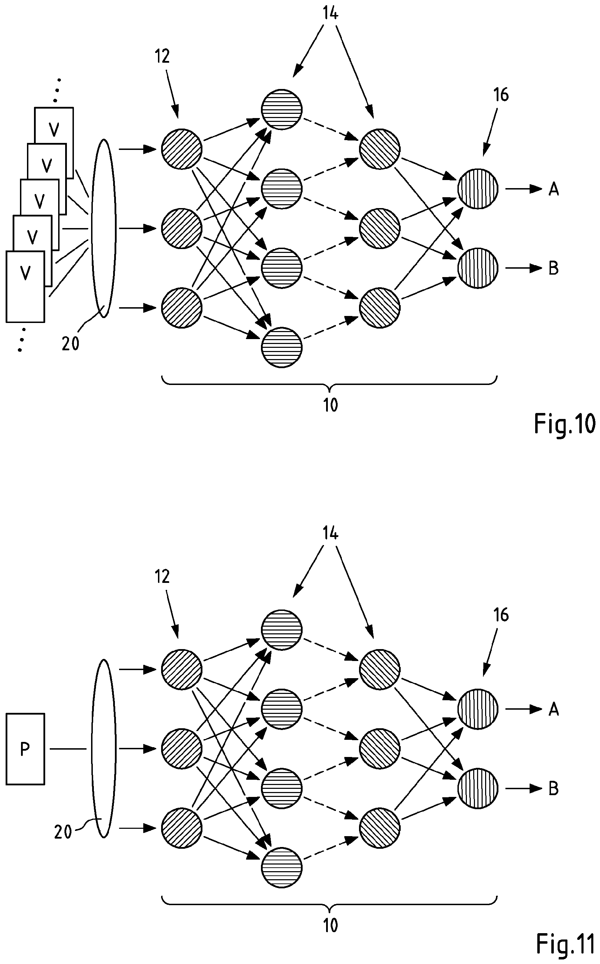

Unter Verwendung eines Graphen, siehe nachfolgend Fig. 10 und 11, können Schichten mit Neuronen als Knoten (Kreise) und ihre Verbindungen als Kanten (Verbindungslinien) dargestellt werden. Die Eingabeschicht wird auch als eine Schicht aus Knoten dargestellt. Die hinterste Schicht des Netzes, deren Neuronenausgaben meist als einzige außerhalb des Netzes sichtbar sind, wird Ausgabeschicht genannt. Davor liegende Schichten werden entsprechend als verdeckte Schicht bezeichnet.

Maschinelle Lernverfahren dienen dann dazu, ein neuronales Netz so zu modifizieren, dass es für bestimmte Eingangsmuster (Vergleichsdatensätze) zugehörige Ausgabemuster (beispielsweise Übereinstimmung ja / nein) erzeugt. Beim überwachten Lernen wird dazu dem künstlichen neuronalen Netzwerk ein Eingangsmuster gegeben und die Ausgabe, die das neuronale Netz in seinem aktuellen Zustand produziert, mit dem Wert verglichen, den es ausgeben soll. Durch Vergleich von Soll- und Istausgabe kann auf die vorzunehmenden Änderungen der Netzkonfiguration geschlossen werden und in umgekehrter Richtung das neuronale Netzwerk erneut durchlaufen werden.

Das Training eines neuen neuronalen Netzes mit einer großen Anzahl von Daten ist rechenintensiv und zeitaufwändig. Insbesondere im Bereich der Erkennung von Objekten in Bildern mit Deep Learning wird eine enorme Rechenleistung benötigt, um das Netz z.B. mit Millionen von Bildern jeweils für viele Trainingszyklen (Epochen) zu trainieren. Ein Convolutional Neural Network (CNN) lernt dabei zunächst die relevanten Strukturen und Formen zu unterscheiden und daraus dann weniger abstraktere Objekte abzuleiten und zu erkennen.

Für ein Training eines neuen neuronalen Netzes kann es daher sinnvoll sein, mit der Hilfe von Transfer Learning auf diesen bereits gelernten Features eines fertig trainierten Netzes aufzubauen. Dabei werden z.B. die fertig trainierten Layer eines neuronalen Netzwerks übernommen und nur der Output-Layer wird auf die Anzahl der zu erkennenden Objektklassen des neuen Netzes angepasst und nachtrainiert.

Der Vorteil besteht darin, dass das neuronale Netz bereits Formen und Strukturen erkennen und unterscheiden kann, und es muss nur eine neue Zuordnung der ObjektKlassen lernen. Die fertig trainierten Schichten werden dabei entweder konstant gehalten und nur am Output-Layer wird nachtrainiert oder es werden einige oder alle Schichten auf Basis des aktuellen Trainings-Stands weiter trainiert.

Das oben beschriebene Verfahren kann nun mit Hilfe eines neuronalen Netzwerkes so umgesetzt werden, dass ein neuronales Netzwerk eines Systems für maschinelles Lernen mit den Vergleichsdatensätzen mit der Vorgabe trainiert wird, dass jeder eingespeiste Vergleichsdatensatz einer Klassifizierung zugeordnet ist und dass jeder Prüfdatensatz mit dem trainierten neuronalen Netzwerk eine der Klassifizierungen zugeordnet wird.

Somit wird einer Mehrzahl von Vergleichsbildern eine gleiche Klassifikation zugeordnet, also beispielsweise ein Herstellungsort. Diese Vorgehensweise entspricht der einer Schrifterkennung, bei der verschieden geschriebene einzelne Buchstaben durch ein trainiertes neuronales Netzwerk jeweils einer Klassifikation eines konkreten Buchstabens zugeordnet werden können.

Des Weiteren kann das Verfahren auch so durchgeführt werden, dass ein neuronales Netzwerk eines Systems für maschinelles Lernen mit den Vergleichsdatensätzen mit der Vorgabe trainiert wird, dass jeder eingespeiste Vergleichsdatensatz unterschiedlich zu allen anderen Vergleichsdatensätzen ist, bei dem nach Abschluss des Trainings für alle Vergleichsdatensätze ein mathematischer Vergleichswert, vorzugsweise in Form einer Zahl oder eines Vektors, erzeugt und abgespeichert wird, dass für jeden Prüfdatensatz mit dem trainierten neuronalen Netzwerk ein mathematischer Prüfwert, ebenfalls vorzugsweise in Form einer Zahl oder eines Vektors, erzeugt und abgespeichert wird und dass die geprüfte Holzwerkstoffplatte bei einer Übereinstimmung des mathematischen Prüfwertes mit einem Vergleichswert als die Holzwerkstoffplatte identifiziert wird, für die der Vergleichsdatensatz erzeugt worden ist.

Hierbei wird ein sogenanntes siamesisches neuronales Netzwerk angewendet, bei dem zwei identisch arbeitende neuronale Netzwerke Vergleichs- und Prüfwerte erzeugen, die miteinander verglichen werden können. In diesem Fall kann eine eindeutige Zuordnung eines Prüfbildes zu einer Holzwerkstoffplatte anhand der Vergleichsbilder erfolgen. Diese Vorgehensweise entspricht der einer Gesichtserkennung.

In weiter bevorzugter Weise werden die beiden beschriebenen Alternativen des Verfahrens nacheinander angewendet, indem vorab für eine Klassifizierung des Prüfbildes durchgeführt wird und indem das Verfahren für Vergleichsbilder jeder der zur Verfügung stehenden Klassifizierungen separat durchgeführt wird.

Somit kann zunächst durch eine Klassifizierung die Holzwerkstoffplatte einem Herstellungsort oder einer Herstellungsanlage zugeordnet werden. Danach kann auf ein siamesisches neuronales Netzwerk zugegriffen werden, dass auf Holzwerkstoffplatten trainiert worden ist, die ausschließlich auf dieser Herstellungsanlage hergestellt worden sind. Dadurch kann eine schrittweise und modularer aufgebaute Identifizierung erreicht werden.

In Fig. 10 ist nun eine schematische Darstellung eines Trainings eines neuronalen Netzwerks 10 gezeigt, das aus einer Eingangsschicht 12, verborgenen Schichten 14 und einer Ausgangsschicht 16 besteht. Eine Mehrzahl von Vergleichsdatensätzen V werden über eine Schnittstelle 20 in die Eingangsschicht 12 eingegeben, wobei das Training mit der Maßgabe erfolgt, dass jeder eingespeiste Vergleichsdatensatz V einer Klassifizierung A oder B zugeordnet ist. Ein solches Training erfolgt mit einer großen Anzahl von Vergleichsdatensätzen, beispielsweise mit 10.000 Vergleichsdatensätzen.

Durch eine Rückkopplung der Ergebnisse jedes Trainingsdurchlaufes kann durch eine Veränderung bzw. Anpassung der Parameter des neuronalen Netzwerkes wie Schwellenwert jedes Knotens bzw. Neurons (Kreise in den verborgenen Schichten 14) und die Gewichtsfaktoren wᵢⱼ von Neuron j zu Neuron i das Training solange durchgeführt werden, bis eine sichere Klassifizierung der Vergleichsdatensätze durch das neuronale Netzwerk sichergestellt werden kann.

Das neuronale Netzwerk ist damit so eingerichtet, dass gemäß Fig. 11 einem Prüfdatensatz P mit dem trainierten neuronalen Netzwerk eine der Klassifizierungen A oder B zugeordnet wird. Als Klassifizierungen A und B können dabei der Herstellungsort, das Herstellungsdatum, die Plattendicke der Holzwerkstoffplatte oder andere allgemeine Daten verwendet werden. Eine Klassifikation umfasst daher eine Mehrzahl von zugehörenden Holzwerkstoffplatten, wobei die Klassifikation als eine mögliche Form der Identifizierung angesehen wird.

Durch das Training mit einer Vielzahl von Vergleichsdatensätzen wird das neuronale Netzwerk so trainiert, dass die Holzwerkstoffplatten, zu denen die für das Training verwendeten Vergleichsdatensätze gehören, vom trainierten Netzwerk klassifiziert werden können. Darüber hinaus können auch Holzwerkstoffplatten klassifiziert werden, deren Vergleichsdatensätze nicht für das Training verwendet worden sind. Insbesondere gilt diese Eigenschaft des trainierten Netzwerks für Holzwerkstoffplatten, die erst nach dem Training hergestellt worden sind und einer der Klassifikationen zugeordnet werden können.

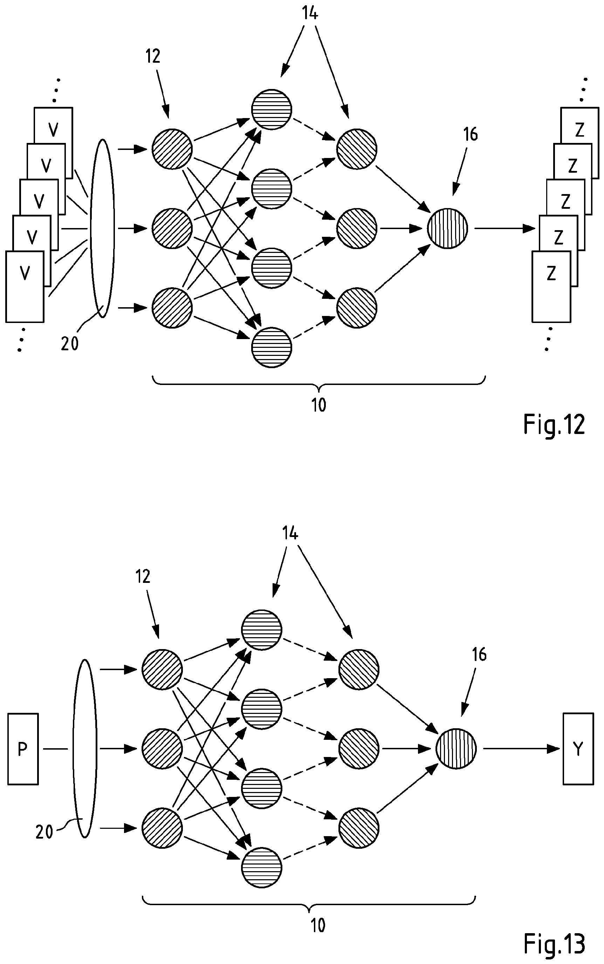

Die Fig. 12 und 13 zeigen eine weitere Anwendung von neuronalen Netzwerken.

Fig. 12 zeigt schematisch ein ähnliches neuronales Netzwerk wie die Fig. 10 und 11. Das neuronale Netzwerk wird mit den Vergleichsdatensätzen V mit der Vorgabe trainiert, dass jeder eingespeiste Vergleichsdatensatz V unterschiedlich zu allen anderen Vergleichsdatensätzen ist. Zudem können dem neuronalen Netz auch jeweils zwei gleiche Bilder mit der Vorgabe eingespeist werden, dass es sich hierbei um zwei identische Bilder handelt.

Die Anzahl der Vergleichsdatensätze ist groß und liegt beispielsweise im Bereich größer als 10.000. Das neuronale Netzwerk wird beim Training derart verändert, dass unterschiedliche Vergleichsdatensätze unterschieden werden können und dass nach Abschluss des Trainings für alle Vergleichsdatensätze V ein von allen anderen Vergleichswerten verschiedener mathematischer Vergleichswert Z erzeugt und abgespeichert wird. Die Vergleichswerte Z der entsprechenden Holzwerkstoffplatten werden dabei verknüpft und abgespeichert.

Das neuronale Netz wurde trainiert, um eine Aufnahme eines Prüfbildes mit den bestehenden Aufnahmen zu vergleichen und festzustellen, ob das aufgenommene Prüfbild eine bereits bestehende Platte zeigt. Das geschieht gemäß Fig. 13 dadurch, dass für den aus dem Prüfbild erzeugten Prüfdatensatz einer zu prüfenden Holzwerkstoffplatte mit dem trainierten neuronalen Netzwerk ein mathematischer Prüfwert Y erzeugt und zumindest zeitweise abgespeichert wird.

Anschließend wird die geprüfte Holzwerkstoffplatte bei einer Übereinstimmung des mathematischen Prüfwertes Y mit einem Vergleichswert Z als die mit dem Vergleichswert Z verknüpfte ursprüngliche Holzwerkstoffplatte identifiziert.

In bevorzugter Weise werden als Vergleichsdatensätze und Prüfdatensätze die Graustufendatensätze der Vergleichsbilder und Prüfbilder dem neuronalen Netzwerk eingespeist, wie sie im Zusammenhang beispielsweise der Fig. 8 erläutert worden sind.

Bei allen zuvor erläuterten Ausgestaltungen des Verfahrens findet eine Identifizierung von Holzwerkstoffplatten statt. In bevorzugter Weise wird in einem Verfahrensschritt für die Mehrzahl von Holzwerkstoffplatten ein Charakterisierungsdatensatz ermittelt und gespeichert. Jeder Vergleichsdatensatz wird dann mit dem Charakterisierungsdatensatz für die jeweilige Holzwerkstoffplatte verknüpft und der geprüften Holzwerkstoffplatte wird bei einer Übereinstimmung des Prüfdatensatzes mit einem Vergleichsdatensatz der mit dem Vergleichsdatensatz verknüpfte Charakterisierungsdatensatz zugeordnet. Somit können der geprüften Holzwerkstoffplatte mittels der Identifizierung der Holzwerkstoffplatte charakteristische Daten zugeordnet werden.

Mit dem Vergleichsdatensatz wird der Charakterisierungsdatensatz verknüpft und in einer Datenbank werden der Vergleichsdatensatz und der Charakterisierungsdatensatz gespeichert, entweder als getrennte und mit Pointern verknüpfte Datensätze oder als ein kombinierter Datensatz.

Beispielsweise wird in dem Charakterisierungsdatensatz mindestens ein Datum gespeichert, das ausgewählt ist aus der nicht abschließenden Liste:
- Materialinformation zur Holzart bzw. zu Holzarten der eingesetzten Holzwerkstoffe,
- Materialinformationen zur Rezeptur der verwendeten Bindemittel und weiterer Additive,
- technische Datenblätter und Laborprotokolle
- Herstellungsparameter wie Temperatur, Druck und Zeitverlauf des Pressvorgangs,
- Produktionsdatum und Produktionsstandort,
- Abmessungen bzw. Format, insbesondere Außenabmessungen und Schichtdicken,
- Art einer aufgebrachten Beschichtung bzw. eines Dekors,
- Zertifizierungen der Platte für das verwendete Holz nach den Normen FSC und PEFC für nachhaltige Waldwirtschaft und entsprechende ISO-Normen,
- Zertifizierungen der Platte in Bezug auf die Abgabe von flüchtigen Stoffen nach TSCA Title VI, CARB2 und CE,
- Lagerorte und Lagerzeiten sowie Transportwege und Transportzeiten,
- Berechtigungsinformationen für ein nachträgliches Auslesen der Datensätze.

Mit diesen Daten des Charakterisierungsdatensatzes kann die zugeordnete Holzwerkstoffplatte charakterisiert werden, wobei im Laufe der weiteren Behandlung der Holzwerkstoffplatte weitere Daten hinzugefügt werden können. Somit sind die Charakterisierungsdaten nach der Herstellung der Holzwerkstoffplatte ermittelbar und können bei der weiteren Verarbeitung und Behandlung berücksichtigt werden.

Insbesondere dann, wenn die Holzwerkstoffplatte durch einen Verarbeitungsschritt aufgetrennt wird, wird für jedes Teilformat der Charakterisierungsdatensatz der aufgetrennten Holzwerkstoffplatte mit dem jeweiligen Vergleichsdatensatz verknüpft. Somit werden der Charakterisierungsdatensatz der ursprünglichen Holzwerkstoffplatte mit den erzeugten Teilformaten verknüpft und gegebenenfalls Daten zum Auftrennen der Holzwerkstoffplatte den Charakterisierungsdaten hinzugefügt. Dazu werden den Charakterisierungsdaten beispielsweise der Bearbeitungszeitpunkt und die neuen Abmessungen des Teilformates hinzugefügt. Die weiteren Vergleichsdaten der unveränderten Seitenkanten des Teilformates werden dann ebenfalls mit dem geänderten Charakterisierungsdatensatz verknüpft.

## Patentansprüche

1. Verfahren zum Identifizieren von Holzwerkstoffplatten,
- bei dem mindestens ein Vergleichsbild für einen vorgegebenen Abschnitt einer Seitenkante für eine Mehrzahl von Holzwerkstoffplatten aufgenommen wird,
- bei dem ein Vergleichsdatensatz aus dem Vergleichsbild anhand der Struktur, insbesondere auf der Basis der Geometrie, der Topographie und/oder der Verteilung der Holzwerkstoffelemente, ermittelt und gespeichert wird,- bei dem zu mindestens einem späteren Zeitpunkt ein Prüfbild für den vorgegebenen Abschnitt einer Seitenkante einer Holzwerkstoffplatte aufgenommen wird,
- bei dem ein Prüfdatensatz aus dem Prüfbild anhand der Struktur, insbesondere auf der Basis der Geometrie, Topographie und/oder der Verteilung der Holzwerkstoffelemente, in gleicher Weise wie bei den Vergleichsdatensätzen ermittelt wird,
- bei dem der Prüfdatensatz der geprüften Holzwerkstoffplatte mit den Vergleichsdatensätzen von mehreren Holzwerkstoffplatten verglichen wird und
- bei dem die geprüfte Holzwerkstoffplatte bei einer Übereinstimmung des Prüfdatensatzes mit einem Vergleichsdatensatz als die Holzwerkstoffplatte identifiziert wird, für die der Vergleichsdatensatz erzeugt worden ist.

2. Verfahren nach Anspruch 1,
bei dem Vergleichsbilder für mehrere Abschnitte an mindestens einer der Seitenkanten, insbesondere jeweils für mindestens einen Abschnitt an jeder Seitenkante der Holzwerkstoffplatte aufgenommen werden und für jedes Vergleichsbild ein Vergleichsdatensatz ermittelt wird.

3. Verfahren nach Anspruch 2,
bei dem für einen Teil der mehreren Abschnitte mit Vergleichsdatensätzen, insbesondere an einem Abschnitt von mehreren Abschnitten mit Vergleichsdatensätzen, jeweils ein Prüfbild aufgenommen wird und ein Prüfdatensatz ermittelt wird.

4. Verfahren nach Anspruch 2 oder 3,
- bei dem Vergleichsbilder für eine Mehrzahl von Abschnitten in vorgegebenen Abständen entlang zumindest eines Teils einer Seitenkante aufgenommen und Vergleichsdatensätze für die Vergleichsbilder erzeugt werden und
- bei dem zu dem mindestens einen späteren Zeitpunkt ein Prüfbild in dem Bereich der Mehrzahl von Abschnitten der Seitenkante aufgenommen wird und ein Prüfdatensatz für den Vergleich mit den Vergleichsdatensätzen ermittelt wird.

5. Verfahren nach einem der Ansprüche 1 bis 4,
bei dem nach einem Bearbeiten mindestens einer Seitenkante der Holzwerkstoffplatte für diese mindestens eine Seitenkante für mindestens einen Abschnitt mindestens ein Vergleichsbild aufgenommen wird und ein Vergleichsdatensatz ermittelt wird.

6. Verfahren nach einem der Ansprüche 1 bis 4,
- bei dem nach einem Trennen einer der Holzwerkstoffplatten in mindestens zwei Teilformate für jedes entstehende Teilformat an mindestens einer neu entstandenen Seitenkante der Teilformate für mindestens einen Abschnitt mindestens ein neues Vergleichsbild aufgenommen wird und ein neuer Vergleichsdatensatz ermittelt wird und
- bei dem für jedes Teilformat jeder neue Vergleichsdatensatz mit der ursprünglichen Holzwerkstoffplatte verknüpft wird.

7. Verfahren nach einem der Ansprüche 1 bis 6,
- bei dem in jedem Bild die erfasste Struktur des Holzwerkstoffes analysiert wird,
- bei dem aus der Struktur der Holzwerkstoffelemente Strukturwerte durch die Form, den Umfang, die Fläche, die Länge und/oder die Ausrichtung der Holzwerkstoffelemente in Bezug auf die Abmessungen des aufgenommenen Abschnitts der Seitenkante bestimmt werden und
- bei dem der Vergleichsdatensatz und der Prüfdatensatz als eine Abfolge von Strukturwerten für einen vorgegebenen Anteil der Holzwerkstoffelemente ermittelt werden.

8. Verfahren nach einem der Ansprüche 1 bis 6,
- bei dem jedes Bild entsprechend eines vorgegebenen Rasters in Bezug auf die Ausrichtung des Abschnitts der aufgenommenen Seitenkante in Pixelbereiche unterteilt wird,
- bei dem jedem Pixelbereich ein aus den einzelnen Pixeln errechneter, vorzugsweise gemittelter Pixelwert, also ein Helligkeitswert und/oder mindestens ein Farbwert, zugeordnet wird und
- bei dem der Vergleichsdatensatz bzw. der Prüfdatensatz als eine Abfolge von Pixelwerten in einer vorgegebenen Reihenfolge aus den Pixelbereichen ermittelt werden.

9. Verfahren nach einem der Ansprüche 1 bis 6,
- bei dem zu jedem Bild die Topographie ermittelt wird,
- bei dem aus der Topographie ein Höhenlinienprofil, Abschnitte des Höhenprofils, eine Dreiecksvermaschung oder Abschnitte der Dreiecksvermaschung als Topographiewerte abgeleitet werden und
- bei dem der Vergleichsdatensatz bzw. der Prüfdatensatz als eine Abfolge von Topographiewerten in vorgegebener Reihenfolge aus der Topographie ermittelt werden.

10. Verfahren nach einem der Ansprüche 1 bis 9,
- bei dem mit einem Algorithmus ein mathematisch definierter Abstand zwischen den Vergleichsdatensätzen und den Prüfdatensätzen berechnet wird,
- bei dem der Abstand mit einem Schwellenwert verglichen wird und
- bei dem dann, wenn der Abstand geringer als der Schwellenwert ist, eine Übereinstimmung festgestellt wird oder
- bei dem dann für den geringsten Abstand eine Übereinstimmung festgestellt wird.

11. Verfahren nach einem der Ansprüche 1 bis 9,
- bei dem ein neuronales Netzwerk eines Systems für maschinelles Lernen mit den Vergleichsdatensätzen mit der Vorgabe trainiert wird, dass jeder eingespeiste Vergleichsdatensatz einer Klassifizierung zugeordnet ist und
- bei dem jedem Prüfdatensatz mit dem trainierten neuronalen Netzwerk eine der Klassifizierungen zugeordnet wird.

12. Verfahren nach einem der Ansprüche 1 bis 9,
- bei dem ein neuronales Netzwerk eines Systems für maschinelles Lernen mit den Vergleichsdatensätzen mit der Vorgabe trainiert wird, dass jeder eingespeiste Vergleichsdatensatz unterschiedlich zu allen anderen Vergleichsdatensätzen ist,
- bei dem nach Abschluss des Trainings für alle Vergleichsdatensätze ein mathematischer Vergleichswert erzeugt und abgespeichert wird,
- bei dem für jeden Prüfdatensatz mit dem trainierten neuronalen Netzwerk ein mathematischer Prüfwert erzeugt und abgespeichert wird und
- bei dem die geprüfte Holzwerkstoffplatte bei einer Übereinstimmung des mathematischen Prüfwertes mit einem Vergleichswert als die Holzwerkstoffplatte identifiziert wird, für die der Vergleichsdatensatz erzeugt worden ist.

13. Verfahren nach Anspruch 11 und 12,
- bei dem das Verfahren nach Anspruch 11 für eine Klassifizierung des Prüfbildes durchgeführt wird und
- bei dem das Verfahren nach Anspruch 12 für Vergleichsbilder in jeder der zur Verfügung stehenden Klassifizierungen separat durchgeführt wird.

14. Verfahren nach einem der Ansprüche 1 bis 13,
- bei dem für die Mehrzahl von Holzwerkstoffplatten ein Charakterisierungsdatensatz ermittelt und gespeichert wird,
- bei dem jeder Vergleichsdatensatz mit dem Charakterisierungsdatensatz für die jeweilige Holzwerkstoffplatte verknüpft wird und
- bei dem der geprüften Holzwerkstoffplatte bei einer Übereinstimmung des Prüfdatensatzes mit einem Vergleichsdatensatz der mit dem Vergleichsdatensatz verknüpfte Charakterisierungsdatensatz zugeordnet wird.

15. Verfahren nach Anspruch 14,
bei dem in dem Charakterisierungsdatensatz mindestens ein Datum gespeichert wird, das ausgewählt ist aus der Liste:
- Materialinformation zur Holzart bzw. zu Holzarten der eingesetzten Holzwerkstoffe,
- Materialinformationen zur Rezeptur der verwendeten Bindemittel und weiterer Additive,
- technische Datenblätter und Laborprotokolle
- Herstellungsparameter wie Temperatur, Druck und Zeitverlauf des Pressvorgangs,
- Produktionsdatum, Produktionszeit und Produktionsstandort,
- Abmessungen bzw. Format, insbesondere Außenabmessungen und Schichtdicken,
- Art einer aufgebrachten Beschichtung bzw. eines Dekors,
- Zertifizierungen der Platte für das verwendete Holz nach den Normen FSC und PEFC für nachhaltige Waldwirtschaft und entsprechende ISO-Normen,
- Zertifizierungen der Platte in Bezug auf die Abgabe von flüchtigen Stoffen nach TSCA Title VI, CARB2 und CE,
- Lagerorte und Lagerzeiten sowie Transportwege und Transportzeiten,
- Berechtigungsinformationen für ein nachträgliches Auslesen der Datensätze.

16. Verfahren nach Anspruch 15,
bei dem nach einem Trennen einer der Holzwerkstoffplatten in mindestens zwei Teilformate der den Teilformaten zugeordnete Charakterisierungsdatensatz um ein Datum ergänzt wird, das den Bearbeitungsschritt des Trennens der Holzwerkstoffplatte in mindestens zwei Teilformate charakterisiert.
